(19) 

Europäisches
Patentamt
European
Patent Office
Office européen
des brevets

(11) **EP 4 517 702 A1**

(12) **EUROPEAN PATENT APPLICATION**
published in accordance with Art. 153(4) EPC

(43) Date of publication:
**05.03.2025 Bulletin 2025/10**

(21) Application number: **23811949.9**

(22) Date of filing: **08.03.2023**

(51) International Patent Classification (IPC):
*G06V 40/13* (2022.01)    *G06V 40/12* (2022.01)
*G06V 10/74* (2022.01)    *G02B 5/00* (2006.01)
*G06F 21/32* (2013.01)

(52) Cooperative Patent Classification (CPC):
G02B 5/00; G06F 21/32; G06V 10/74; G06V 40/12;
G06V 40/13

(86) International application number:
**PCT/KR2023/003138**

(87) International publication number:
**WO 2023/229162 (30.11.2023 Gazette 2023/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.05.2022  KR 20220065116
11.08.2022  KR 20220100659**

(71) Applicant: **Samsung Electronics Co., Ltd.
Suwon-si, Gyeonggi-do 16677 (KR)**

(72) Inventor: **KIM, Jinho
Suwon-si, Gyeonggi-do 16677 (KR)**

(74) Representative: **Gulde & Partner
Patent- und Rechtsanwaltskanzlei mbB
Berliner Freiheit 2
10785 Berlin (DE)**

(54) **FINGERPRINT INFORMATION ACQUISITION METHOD BASED ON THREE-DIMENSIONAL SHAPE IDENTIFICATION AND ELECTRONIC DEVICE THEREOF**

(57)    An electronic device comprises a fingerprint sensor disposed on a display, and the fingerprint sensor may comprise: an aperture that adjusts the amount of light incident on a lens disposed in a sensing area of the fingerprint sensor; and a half-wave plate disposed so as to at least partially overlap the sensing area. The half-wave plate is disposed in the sensing area so that a second component complementary to a first component has a phase difference of substantially a half wavelength with the first component. A processor may: use the fingerprint sensor to acquire the first component generated on the basis of light that is at least partially reflected by an external object and is not transmitted through the half-wave plate, and acquire the second component generated on the basis of light that is at least partially reflected by the external object and is transmitted through the half-wave plate; generate a phase image on the basis of a differential component between the first and second components; and determine whether the external object is a three-dimensional shape pattern on the basis of the phase image, and perform a designated operation on the basis of a comparison result between the phase image and registered fingerprint authentication data of a user.

FIG. 11

EP 4 517 702 A1

**Description**

[Technical Field]

Embodiments of the present invention relate to a method of acquiring fingerprint information based on three-dimensional shape identification, for example, a method of acquiring a fingerprint using touch input and an electronic device thereof.

[Background Art]

With the mobile communication technologies and processor technologies evolved, electronic devices (e.g., mobile terminal devices) may perform a variety of functions beyond a traditional call function. For example, various applications such as Internet browsers, games and calculators have been developed for and used in the electronic devices. As various functions have become available in the electronic devices, security for information stored in the electronic devices has become more important. In response to security needs, authentication technologies based on user's biometric information have been developed.

Authentication technologies based on biometric information may include operations of acquiring various biometric information, for example, such as a fingerprint, an iris, a voice, a face, and a blood vessel from a user and comparing the acquired biometric information with user's biometric information pre-registered to determine whether the user is an authenticated user. Of the biometric information presented in the example, fingerprint recognition technology is currently the most commercialized for a number of reasons, such as convenience, security, or economics. The electronic device may store in a memory thereof fingerprint information extracted from a fingerprint image to be used for fingerprint authentication from a user for user authentication using fingerprint recognition. The electronic device, through a fingerprint sensor module, may detect the user's unique fingerprint information according to ridges and valleys formed on the finger, and determine whether the user is authenticated through comparison to a pre-stored fingerprint. That is, when a newly input fingerprint image from a user requesting authentication is compared to and matched with a pre-registered fingerprint image, the electronic device may authenticate the corresponding user as a registered user.

[Disclosure of Invention]

[Technical Problem]

Since an operation of an optical fingerprint sensor uses only a difference in an amount of light reaching each pixel of a fingerprint sensor (two-dimensional array sensor), it may be difficult to verify that the reason for the difference in the amount of light reaching the sensor occurs. In other words, it may be difficult to distinguish whether the difference in the amount of light reaching the sensor is caused by a difference in a degree of reflection due to a difference in contact between a display surface and a fingerprint, such as the ridges and valleys of a real fingerprint, or whether the difference in the amount of light reaching the sensor is caused by a two-dimensional image with different degrees of reflection by printing an image of the fingerprint on a two-dimensional piece of paper. In fact, in case of an optical InDisplay fingerprint sensor, when two-dimensional printing and a real finger are recognized, the same fingerprint image is acquired, and there may be a risk of theft when the fingerprint image is used for personal identification.

An electronic device and a method of acquiring fingerprint information of an electronic device, according to various embodiments of the present document, can solve this problem of fingerprint theft by acquiring not only an image of a fingerprint surface, but also information identifying whether an authenticated sample has a three-dimensional shape, substantially at the same time.

However, the object to be achieved by the present disclosure is not limited to the above-mentioned objects but may be variously expanded without departing from the spirit and scope of the present disclosure.

[Solution to Problem]

An electronic device may include a display, a fingerprint sensor disposed on the display, a memory, and a processor operatively connected to the display, the fingerprint sensor, and the memory. The fingerprint sensor may include a lens disposed in a sensing area of the fingerprint sensor, an aperture that adjusts an amount of light incident on the lens, and a half-wave plate that is disposed to at least partially overlap the sensing area of the fingerprint sensor and generates a phase difference in light as a second component complementary to a first component. The half-wave plate may be disposed in the sensing area of the fingerprint sensor so that the second component has a phase difference of a substantially half wavelength from the first component. The processor may, in response to sensing contact with an external object related to fingerprint authentication in the sensing area, output light to the external object using a light source. The processor may, using the fingerprint sensor, acquire a first component generated on the basis of light that is at least partially reflected by an external object and has not passed through the half-wave plate, and a second component generated on the basis of light that is at least partially reflected by the external object and has passed through the half-wave plate. The processor may generate a phase image on the basis of a differential component of the first component and the second component, and may identify whether the external object is a pattern of a three-dimensional shape on the basis of the phase image. The processor may, in response to identifying that the external object is a pattern of a three-dimensional shape, identify whether the phase image matches fingerprint authentication data of a registered user, and perform a designated operation on the basis of a result of comparing the phase image to the fingerprint authentication data of the registered user.

There is provided a method of acquiring fingerprint information of an electronic device, according to various embodiments. The method may include: outputting light to an external object using a light source in a sensing area in response to sensing contact with the external object related to fingerprint authentication, acquiring, using a fingerprint sensor, a first component generated on the basis of light that is at least partially reflected by the external object and has not passed through a half-wave plate, acquiring a second component generated on the basis of light that is at least partially reflected by the external object and that has passed through the half-wave plate, generating a phase image on the basis of a differential component of the first component and the second component, identifying whether the external object is a pattern of a three-dimensional shape on the basis of the phase image, identifying, in response to identifying that the external object is a solid pattern of the three-dimensional shape, whether the phase image matches fingerprint authentication data of a registered user, and performing a designated operation on the basis of a result of comparing the phase image to the fingerprint authentication data of the registered user.

[Advantageous Effects of Invention]

An electronic device and method of acquiring fingerprint information, according to various embodiments of the present document, can use a single fingerprint sensor to identify whether an authenticated sample has a three-dimensional shape, thereby enabling more secure fingerprint recognition.

In various embodiments, an electronic device can determine a three-dimensional shape of a sample without acquiring a plurality of images, thereby enabling more secure fingerprint recognition during the same recognition time without increasing fingerprint recognition time.

In addition, various effects that can be directly or indirectly identified through the present document may be provided.

[Brief Description of Drawings]

FIG. 1 is a block diagram of an electronic device in a network environment according to various embodiments.

FIG. 2 illustrates fingerprint recognition operation according to a comparative embodiment.

FIG. 3 is an exemplified view for describing an amplitude component and a phase component of a fingerprint, according to an embodiment.

FIGS. 4A and 4B illustrate a fingerprint recognition method according to a comparative embodiment. FIG. 4C illustrates phase images according to comparative embodiments.

FIG. 5A illustrates a block diagram of a configuration of an electronic device, according to various embodiments. FIG. 5B illustrates a process for transmitting and receiving electrical signals or optical signals between configurations of an electronic device, according to various embodiments.

FIG. 6A illustrates a method of acquiring fingerprint information of an electronic device, according to various embodiments. FIG. 6B illustrates phase images acquired on an electronic device, according to various embodiments.

FIG. 7A illustrates a method of acquiring a fingerprint image using a half-wave plate on an electronic device, according to various embodiments. FIG. 7B illustrates phase images acquired on an electronic device, according to various embodiments.

FIG. 8 illustrates a front view 800a and a cross-sectional view 800b of a configuration of an optical fingerprint sensor on an electronic device, according to various embodiments.

FIG. 9 illustrates a position of a half-wave plate on an aperture according to various embodiments.

FIG. 10 illustrates a process of recognizing a fingerprint of an electronic device, according to various embodiments.

FIG. 11 is a flowchart illustrating a method of acquiring fingerprint information of an electronic device, according to various embodiments.

FIG. 12 is a flowchart illustrating a method of acquiring fingerprint information of an electronic device, according to various embodiments.

[Mode for the Invention]

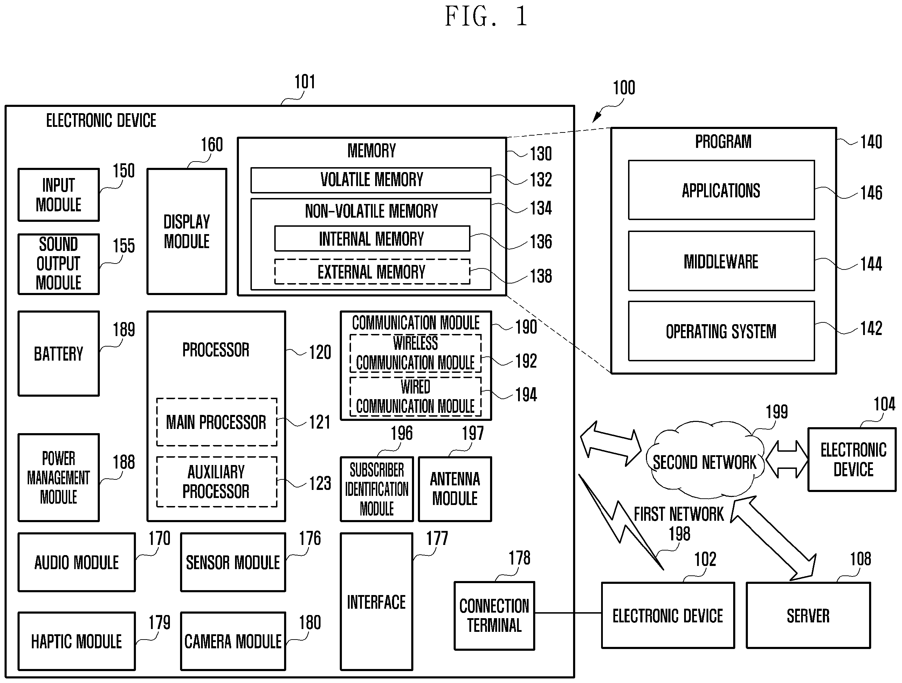

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101.

The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

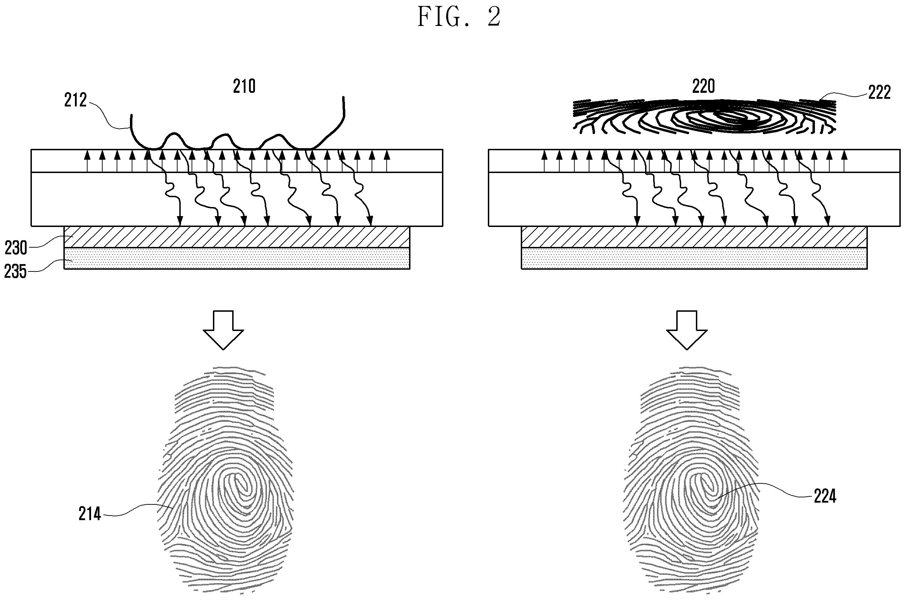

FIG. 2 illustrates fingerprint recognition operation according to a comparative embodiment.

According to the reference numeral 210, a processor (e.g., the processor 120 in FIG. 1) may emit light using a light source to measure reflection light reflected by a finger (e.g., a fingerprint) when a user's finger 212 comes into contact with a display (e.g., the display module 160 in FIG. 1) that includes a fingerprint sensor. The processor 120 may acquire a fingerprint image on the basis of the measured reflection light. Specifically, the processor 120 may identify differences in a degree of light reflection occurring in ridge and valley portions of a fingerprint using a focusing element 230, such as a lens or a collimator. The processor 120 may sense and distinguish differences in an amount of light gathering on each pixel of an image sensor (e.g., the sensor module 176 in FIG. 1), and convert these differences into the shape of ridges and valleys to obtain a default image 214 of the fingerprint. In forming the default image 214 of the fingerprint by the processor 120, differences in a degree of reflection due to the characteristics of the ridges and valleys may act as an important constituent element that makes a difference in the generated fingerprint image.

However, an operation of an optical fingerprint sensor may only sense differences in an amount of light gathering on each pixel of an array sensor 235. Therefore, the processor 120 may only sense a difference in the amount of light reaching the sensor, but may have difficulty sensing why the difference in amount of light occurs. As illustrated in reference numeral 220, even if the processor 120 may print an image of a fingerprint other than the user's finger 212 onto a two-dimensional paper 222 to be authenticated by a fingerprint sensor, the processor 120 may obtain a fingerprint image 224 that is substantially identical to the user's finger 212. In this case, there may be a risk of theft when the fingerprint image is used for personal identification purposes.

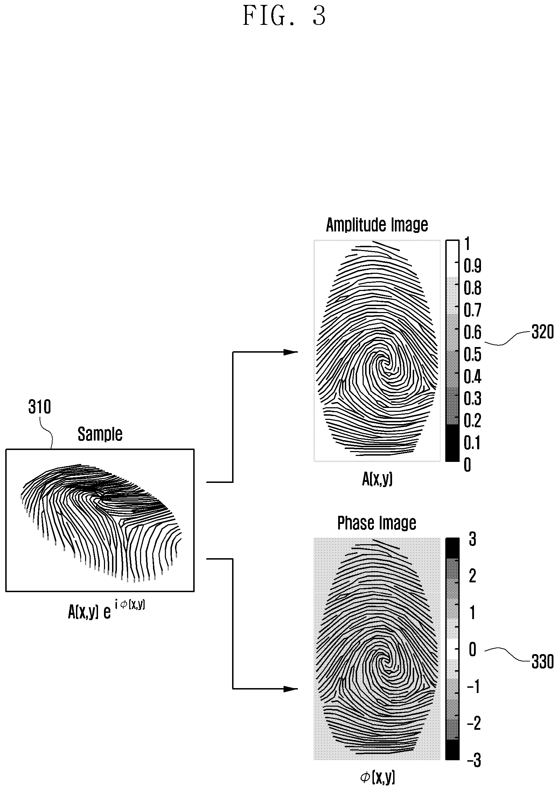

FIG. 3 is an exemplified view for describing an amplitude component and a phase component of a fingerprint, according to an embodiment.

With reference to FIG. 3, according to an embodiment, a sample (e.g., a fingerprint) 310 used in fingerprint recognition may have a three-dimensional shape consisting of ridges and valleys of the fingerprint.

The sample (i.e., an external object or fingerprint requesting authentication) 310 may include amplitude (amplitude, (A(x,y))) information indicative of a difference in the amount of light (e.g., reflectance or transmittance) in the ridge and valley portions, and phase (phase, Φ(x,y)) information indicative of a flexure (or depth) or thickness information in the ridge and valley portions. Information on the sample 310 may be expressed by $A(x,y)e^{i\phi(x,y)}$, which represents amplitude information and phase information. Ideally, the information on the sample 310 may be distinguished into an amplitude image 320 indicative of amplitude information, and a phase image 330 indicative of phase information. A vertical axis on the amplitude image 320 may refer to magnitude of amplitude. The vertical axis shows a value that normalizes the magnitude of amplitude, and may include values between 0 and 1. A vertical axis of the phase image 330 may refer to magnitude of phase, and may have values between -pi (circumferential ratio, approximately 3.14) and +pi.

However, an optical fingerprint sensor may include a photodetector (or a light detection element of an image sensor) that senses light, and the photodetector may sense only power or intensity (amplitude) of light. As a result, the optical fingerprint sensor acquires a fingerprint image (e.g., an amplitude fingerprint image) 320 that includes only amplitude (amplitude, (A(x,y))) information without phase (phase, Φ(x,y)) information.

The electronic device may acquire the amplitude image 320 from the sample 310 requesting authentication and compare the amplitude image 320 to fingerprint information registered in the electronic device, which may be substantially equivalent to performing authentication on a fingerprint surface pattern (e.g., a pattern between ridges and valleys).

In this case, since the amplitude image 320 only includes the fingerprint surface pattern (e.g., a pattern between ridges and valleys), it is impossible to determine from the amplitude image whether a sample requiring authentication is actually a real finger with a solid shape or a two-dimensional object printed with a fingerprint shape. In other words, even if a fingerprint shape is printed on a two-dimensional piece of paper and authenticated to a fingerprint sensor, the electronic device will acquire the same fingerprint shape as a real fingerprint, and there may be a risk of theft.

Accordingly, for an electronic device including an optical fingerprint sensor, a method of acquiring the phase (phase, Φ(x,y)) image 330 indicative of flexural information (e.g., a depth pattern) of the sample 310 and determining whether the sample 310 is a solid pattern or a two-dimensional pattern may be needed to prevent theft.

Hereinafter, a method of acquiring an amplitude image and a phase image using an optical fingerprint sensor by an electronic device according to various embodiments, and using the amplitude image and the phase image for fingerprint authentication will be described.

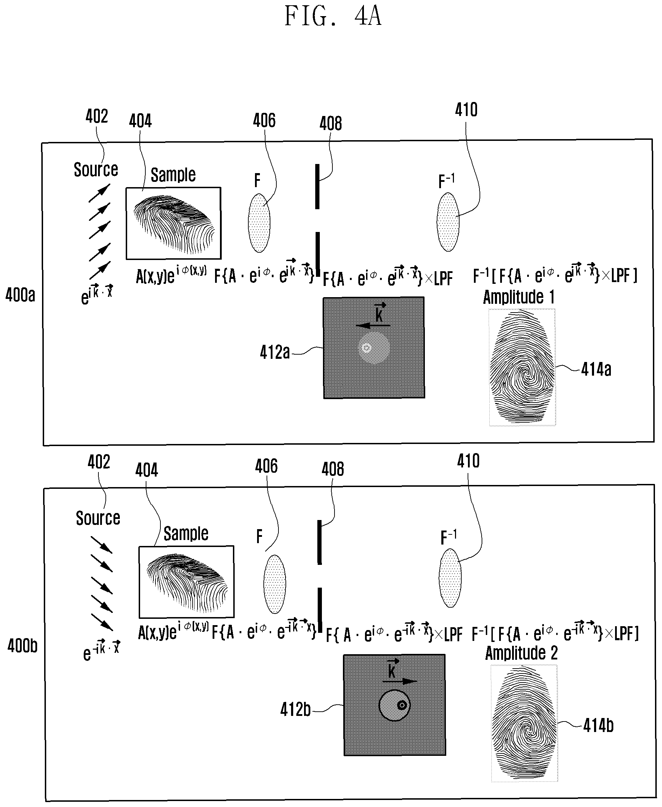

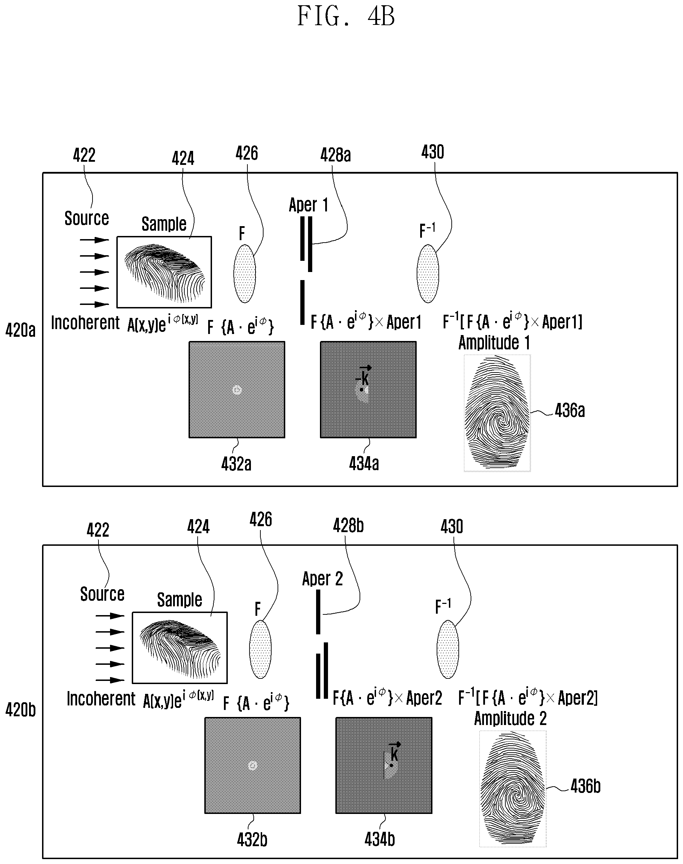

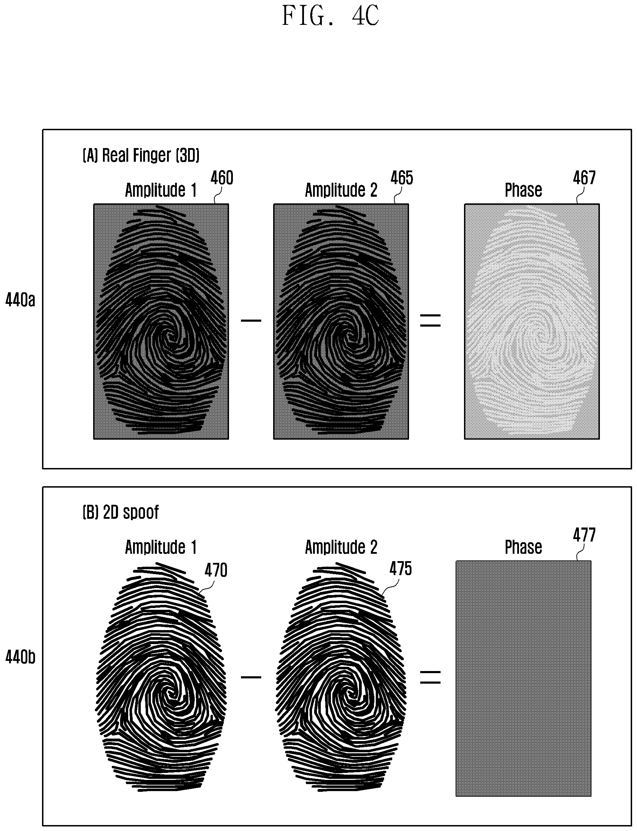

FIGS. 4A and 4B illustrate a fingerprint recognition method according to a comparative embodiment. FIG. 4C illustrates phase images according to comparative embodiments.

With reference to FIG. 4A, an electronic device according to a comparative embodiment may control a direction of a light source 402 that irradiates a three-dimensional shaped external object (e.g., a finger sample) 404 to obtain different amplitude images. The reflection light, at least partially reflected from the external object 404, may be incident on a first lens 406 with a characteristic, $A(x,y)e^{i\Phi(x,y)}$, of a three-dimensional object. Information on light (not illustrated) incident on the first lens 406 may undergo a change equivalent to performing a mathematical Fourier transform at an aperture 408 positioned at a focal length of the first lens 406 as the light passes through the first lens 406. The transformed light may pass at least partially through the aperture 408 to reach a second lens 410. Information on light that has passed through the second lens 410 may undergo a change equivalent to performing a mathematical inverse Fourier transform. The light that has passed through the second lens 410 may reach a light sensing element (e.g., photodetector) (not illustrated). The light 412a and 412b that has passed through the first lens 406 and aperture 408 may have an effect of filtering out a lower frequency band below a predetermined level in the Fourier domain.

When the light source irradiating the external object 404 is configured in a predetermined direction, $\vec{k}$, the shape of the light source 402 may be formulated as $e^{i\vec{k}\cdot\vec{x}}$. According to the rules of the Fourier transform, when the exponential term is multiplied, a phase shift occurs by $\vec{k}$ in the Fourier domain or frequency domain, so that a first fingerprint image (amplitude image 1) 414a, which is finally acquired as illustrated in the reference numeral 400a, is shifted in the k-direction in the Fourier domain and may be filtered asymmetrically.

When the light source irradiating the external object 404 is configured in a predetermined direction, $-\vec{k}$, the shape of the light source 402 may be formulated as $e^{i\vec{k}\cdot\vec{x}}$. According to the rules of the Fourier transform, when the exponential term is multiplied, a phase shift occurs by $-\vec{k}$ in the Fourier domain or frequency domain, so that a second fingerprint image (amplitude image 1) 414b, which is finally acquired as illustrated in the reference numeral 400b, is shifted in the -k-direction in the Fourier domain and may be filtered asymmetrically.

The first fingerprint image (amplitude image1) 414a and the second fingerprint image (amplitude image1) 414b may include complementary information to each other, and a general fingerprint image (amplitude image) may be obtained by adding the first fingerprint image (amplitude image1) 414a and the second fingerprint image (amplitude image1) 414b. The general fingerprint image (amplitude image) may refer to an image measured by the human eye.

With reference to FIG. 4B and FIG. 4C, a first aperture 428a (e.g., a first aperture 428a in FIG. 4B) and a second aperture 428b (e.g., a second aperture 428b in FIG. 4B), according to an embodiment, may be designed to filter light with complementary components. For example, the first aperture 428a may be designed with a first shape that only allows spatial frequency information of a (-) component to pass through in the Fourier domain, and the second aperture 428b may be designed with a second shape that only allows spatial frequency information of a (+) component to pass through in the Fourier domain.

An external object 424 of a three-dimensional shape (e.g., a fingerprint sample) may be expressed as a complex expression, $A(x,y)e^{i\phi(x,y)}$, that includes phase information as well as amplitude information.

The reflection light irradiated from a light source 422 and reflected from the external object 424 may be at least partially incident on a lens 426 with a characteristic of a three-dimensional object, i.e., $A(x,y)e^{i\phi(x,y)}$,

In the reference numeral 420a, when information on light incident on the lens 426 is Fourier transformed and defined as $F\{A \cdot e^{i\phi}\}$ 432a, at least some light 434a that has passed through according to the shape of the first aperture 428a may be defined as $F\{A \cdot e^{i\phi}\} \times aper1$ with some frequency components blocked. At least some light 434a from the component filtered by the first aperture 428a of the components passed through the lens 426 may be inverse Fourier transformed through a different lens (e.g., a tube lens) 430 to be changed into the image domain and transmitted to a photodetector (or image sensor) (not illustrated). Here, the inverse Fourier transformed light may be defined as $F^{-1}[F\{A.e^{i\phi}\} \times aper1]$.

In the reference numeral 420b, when information on light incident on the lens 426 is Fourier transformed and defined as $F\{A.e^{i\phi}\}$ 432b, at least some light 434b that has passed through according to the shape of the second aperture 428b may be defined as $F\{A.\ e^{i\phi}\} \times aper2$ with some frequency components blocked. At least some light 434b from the component filtered by the second aperture 428b of the components passed through the lens 426 may be inverse Fourier transformed through the different lens (e.g., a tube lens) 430 to be changed into the image domain and transmitted to a photodetector (or image sensor) (not illustrated). Here, the inverse Fourier transformed light may be defined as $F^{-1}[F\{A.e^{i\phi}\} \times aper2]$

Since the photodetector (or image sensor) detects only the amplitude information of the component (e.g., $F^{-1}[F\{A.e^{i\phi}\} \times aper1]$ or $F^{-1}[F\{A.e^{i\phi}\} \times aper2]$)) that reaches the photodetector, a first fingerprint sensor may acquire a first fingerprint image (e.g., amplitude 1) 436a corresponding to the amplitude information of a sensing area, and a second fingerprint sensor may acquire a second fingerprint image (e.g., amplitude 2) 436b corresponding to the amplitude information of the sensing area.

For example, when Fourier domain information of a first component (e.g., -k component) filtered through the first aperture 428a is c1 , the first fingerprint image (e.g., amplitude 1) 436a may be represented as shown in Equation 1 below.

[Equation 1]

$$\text{Amplitude image 1} = \left| \sum c_{1n} e^{-i\overrightarrow{kn}\cdot\overrightarrow{x}} \right|^2$$

When Fourier domain information of a second component (e.g., +k component) filtered through the second aperture 428b is c2 , the second fingerprint image (e.g., amplitude 2) 436b may be represented as shown in Equation 2 below.

[Equation 2]

$$\text{Amplitude image 2} = \left| \sum c_{2n} e^{+i\overrightarrow{kn}\cdot\overrightarrow{x}} \right|^2$$

The first fingerprint image (e.g., amplitude 1) 436a may represent information according to reflection light when the fingerprint is irradiated with light in the -k direction, and the second fingerprint image (e.g., amplitude 2) 436b may represent information according to reflection light when the fingerprint is irradiated with light in the +k direction.

Meanwhile, when the external object 424 is a three-dimensional fingerprint sample, flexural (or depth) information varies depending on a position (x,y) of the ridge and valley of the fingerprint, and the phase information (phase φ) of the fingerprint may have a value $\varphi(x,y)$ that is not constant but varies depending on the position (x,y).

As an example, when a three-dimensional object of a shape including $\varphi(x,y)$ (e.g., $A(x,y)e^{i\phi(x,y)}$) is irradiated with light in one direction, the sensor may acquire a gradient image along the irradiation direction of light according to $\varphi(x,y)$, which is a change in thickness (or flexure, depth) of the object. For example, when a three-dimensional object (e.g., $A(x,y)e^{i\phi(x,y)}$) is irradiated with light through two sensors in opposite directions, each sensor may acquire amplitude images with a difference in shading (e.g., the first fingerprint image (e.g., amplitude 1) 460 and the second fingerprint image (e.g., amplitude 2) 465). When the electronic device 101 obtains a differential component using these two amplitude images, the electronic device 101 may acquire a phase image 467 of a phase component with a common component removed, as illustrated at the reference numeral 440a in FIG. 4C.

The reflection light of the external object 424 incident from opposite directions through the first aperture 428a and the second aperture 428b, which are designed with complementary shapes, may cause a difference in shading. Since the Fourier transform functions of the first fingerprint image (e.g., amplitude 1) 436a and the second fingerprint image (e.g., amplitude 2) 436b are not symmetrical to each other when the external object 424 is a three-dimensional shape, the electronic device may acquire a phase image that includes only a phase component with the images not canceling out completely even if the common component is removed to acquire the differential component.

In contrast, as illustrated at reference numeral 440b in FIG. 4C, when the object 424 is a two-dimensional sample, since the depth information does not change with position coordinates (x,y), when the differential component is found using the two amplitude images, the phase is zero (e.g., $\varphi(x,y) = 0$), and the degree of reflection of the object may be expressed in the form of a real number $A(x,y)$ for each position coordinate. The Fourier transform function of the real number $A(x,y)$ may be represented as Equation 3 below.

[Equation 3]

$$\text{Real} = c_1 e^{-i\vec{k}\cdot\vec{x}} + c_2 e^{+i\vec{k}\cdot\vec{x}}$$

$$= c_1\left(\cos\vec{k}\cdot\vec{x} - i\sin\vec{k}\cdot\vec{x}\right) + c_2\left(\cos\vec{k}\cdot\vec{x} + i\sin\vec{k}\cdot\vec{x}\right)$$

$$= (c_1 + c_2)\cos\vec{k}\cdot\vec{x} - i(c_1 - c_2)\sin\vec{k}\cdot\vec{x}$$

$$\therefore c_1 - c_2 = 0$$

Here, when the external object 424 is a two-dimensional sample, the +k and -k components are symmetrical to each other, so that the values of $c_1$ and $c_2$ are equal to each other. Accordingly, an image 477 that does not have contrast may be acquired when a differential component is found for both the first image 470 and the second image 475 corresponding to the two-dimensional sample.

When $c_1$ and $c_2$ have different values (or when the differential component of the first image and the second image has contrast), the electronic device 101 may recognize the fingerprint image as an image acquired from the reflection light of the object in a complementary direction, and may identify that the external object requiring authentication is a solid pattern having a three-dimensional shape (e.g., a fingerprint).

The electronic device may acquire a first fingerprint image and a second fingerprint image including amplitude information with the reflection light incident from opposite directions through the first aperture 428a and the second aperture 428b designed with complementary shapes to each other, and generate a phase image using the differential component within an area where the first fingerprint image and the second fingerprint image overlap to determine whether the external object 424 is a solid (3D) shape or a planar (two-dimensional) shape.

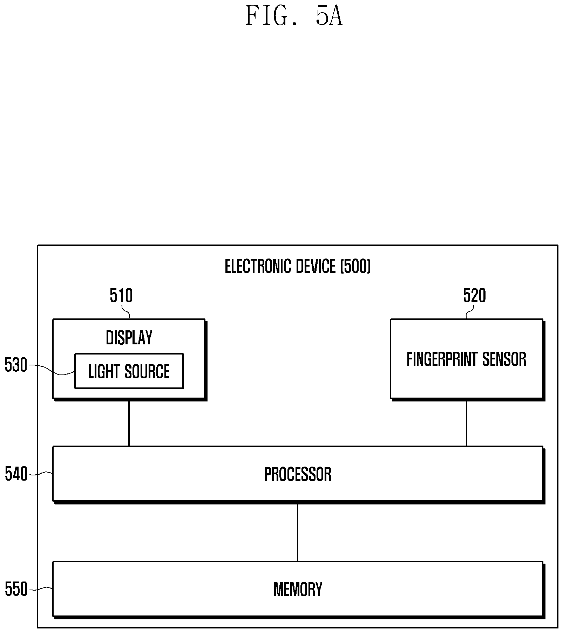

FIG. 5A illustrates a block diagram of a configuration of an electronic device, according to various embodiments.

According to various embodiments, the electronic device 500 includes a display 510, a fingerprint sensor 520, a light source 530, a processor 540, and/or a memory 550, and it will not be impractical to implement various embodiments of this document even if some of the configurations illustrated are omitted or substituted. In addition, the electronic device 500 may include at least some of the configurations and/or features of the electronic device 101 in FIG. 1.

According to various embodiments, the display 510 displays an image and may be implemented as one of a liquid crystal display (LCD), a light-emitting diode (LED) display, an organic light-emitting diode (OLED) display, a micro light-emitting diode (micro LED) display, a micro electro mechanical systems (MEMS) display, or an electronic paper display, but is not limited thereto. The display 510 may include at least some of the configurations and/or features of the display module 160 in FIG. 1.

According to various embodiments, the fingerprint sensor 520 may acquire fingerprint information on a user. The fingerprint sensor 520 may be implemented as an optical fingerprint sensor capable of acquiring a fingerprint image, but is not limited thereto. The fingerprint information acquired by the fingerprint sensor 520 is stored as image information and may be used for authentication of the electronic device 500 through comparison to pre-registered fingerprint information. The fingerprint sensor 520 may be formed in at least one area of a rear surface of the display 510 or inside the display 510. Accordingly, when a touch input using a user's finger on a cover window of the display 510 occurs, touch information may be acquired at a touch sensor (not illustrated) and, at least partially concurrently, fingerprint information may be acquired at the fingerprint sensor 520.

According to an embodiment, the fingerprint sensor 520 may acquire fingerprint information using light emitted from the display 510. The display 510 may function as the light source 530 for an operation of the fingerprint sensor 520.

According to an embodiment, the fingerprint sensor 520 may include a CMOS image sensor (CIS), a charge coupled device image sensor (CCD), a TFT amorphous silicon image sensor, or an organic photodiode (OPD).

According to an embodiment, the fingerprint sensor 520 may include at least one lens. The lens disposed in the fingerprint sensor 520 may include a lens type in which the lens magnification is substantially less than one order of magnitude (e.g., approximately 1/4 to approximately 1/7), and a lensless type in which no lens is present, or in which a micro-lens, pin-hole array, or optical fiber is used to achieve a lens magnification substantially closer to one order of magnitude.

According to an embodiment, the fingerprint sensor 520 may be activated when a fingerprint recognition function is activated, for example, when a secure application such as an unlocking operation or a messaging application is launched. According to another embodiment, the fingerprint sensor 520 may be activated when a fingerprint recognition function is activated and a touch input occurs on an area of the fingerprint sensor 520.

According to an embodiment, the electronic device 500 according to the present document uses an optical fingerprint sensor and may use the display 510 as a default form of the light source 530. Hereinafter, the description will be limited to when the electronic device 500 using the optical fingerprint sensor uses light emitted from the display 510 as a form of the light source 530, but the light source 530 may be disposed separately within the electronic device 500.

According to various embodiments, the processor 540 is a configuration capable of performing calculations or data processing related to a control and/or a communication of respective constituent elements of the electronic device 500, and may include at least some of the configurations of the processor 120 in FIG. 1. The processor 540 may be electrically connected to internal constituent elements of the electronic device 500, including the display 510, the fingerprint sensor 520, the light source 530, and/or the memory 550.

In an embodiment, the processor 540 may supply a drive signal for fingerprint sensing using at least some of a plurality of pixels of the display 510. The drive signal may be provided to allow at least some of the plurality of pixels of the display 510 to emit light and operate as a light source for the fingerprint sensor 520.

According to an embodiment, the memory 550 is for temporarily or permanently storing non-limiting digital data, and may include at least one of the configurations of the memory 130 in FIG. 1. The memory 550 may include volatile memory and non-volatile memory. The non-volatile memory may include at least one of one time programmable ROM (OTPROM), programmable ROM (PROM), erasable and programmable ROM (EPROM), electrically erasable and programmable ROM (EEPROM), mask ROM, flash ROM, flash memory (e.g., NAND flash or NOR flash, etc.), a hard drive, or a solid state drive (SSD), and the volatile memory may include at least one of dynamic RAM (DRAM), static RAM (SRAM), or synchronous dynamic RAM (SDRAM).

According to an embodiment, the memory 550 may store various instructions that may be executed on the processor 540. These instructions may include control commands such as arithmetic and logical calculations, data movement, and/or input/output that may be recognized by the processor 540, and may be defined in a framework stored in the memory 550.

According to an embodiment, the memory 550 may include a register (not illustrated). The register may record an image of reflection light sensed when a designated light source (e.g., at least some of a plurality of pixels) is turned on. The processor 540 may control an operation of the designated light source and an operation of the fingerprint sensor 520 to be synchronized, and may reconstruct the fingerprint image by receiving the stored values from the register and undergoing image processing.

According to an embodiment, the memory 550 may store user data related to a fingerprint of a registered user through a fingerprint registration operation. For example, the user data may be stored within a secure area of the memory 550.

According to various embodiments, the processor 540 is not limited to the calculations and data processing functions that may be implemented within the electronic device 500. Hereinafter, however, an operation for solving a problem of fingerprint theft by simultaneously acquiring information identifying whether an external object for which authentication is requested has a three-dimensional shape will be described in more detail. Operations of the processor 540 that will be described below may be performed by loading instructions stored in the memory 550 described above.

According to an embodiment, the user data pre-stored in the memory 550 may include one of a shape of the user's fingerprint, information on depths of valleys that the user's fingerprint has, spacing between valleys and ridges of the user's fingerprint, an angle formed by the valleys and ridges of the user's fingerprint and an irradiation direction of the light source 530, a shape of cross-section data according to the angle formed by the valleys and ridges and the irradiation direction of the light source 530, or an angle and direction of irradiation of the light source 530.

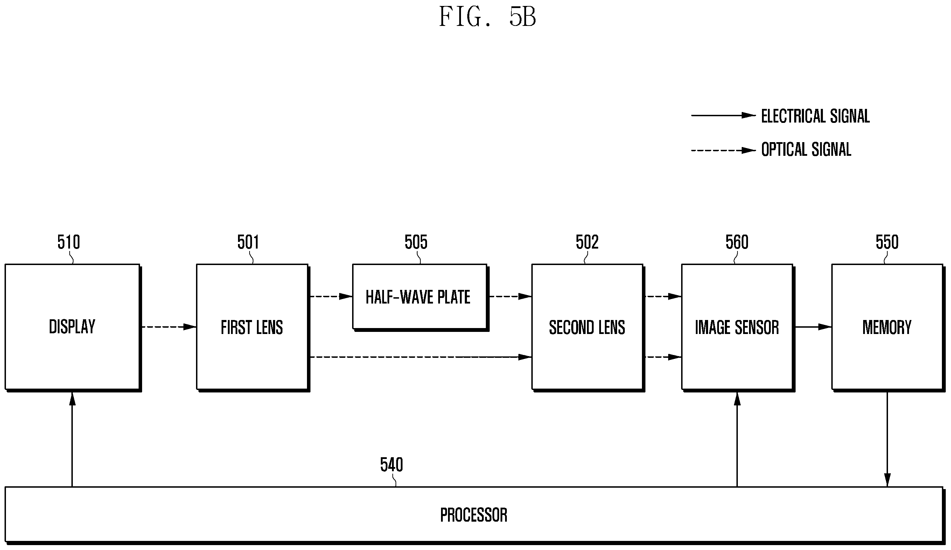

FIG. 5B illustrates a process for transmitting and receiving electrical signals or optical signals between configurations of an electronic device, according to various embodiments.

According to various embodiments, the processor 540 may transmit an electrical signal to the display 510. The display 510 may, in response to sensing of an object on the fingerprint sensor (e.g., the sensor module 176 in FIG. 1), convert the electrical signal to an optical signal and transmit the optical signal to the image sensor 560. The optical signal transmitted from the display 510 to the image sensor 560 may pass through a first lens 501 and a second lens 502. The electronic device 500 may include a half-wave plate 505. The half-wave plate 505 may be disposed between the first lens 501 and the second lens 502. The half-wave plate 505 may create a phase delay by a half wavelength for at least a portion of the optical signal that has passed through the first lens 501. The optical signal that has not passed through the half-wave plate 505 may be filtered into a first component and transmitted to the image sensor 560. The optical signal that has passed through the half-wave plate 505 may be filtered into a second component and transmitted to the image sensor 560.

According to various embodiments, the image sensor 560, under the control of the processor 540, may generate one image corresponding to a differential component using the optical signal filtered into the first component and the optical signal filtered into the second component. The image sensor 560, under the control of the processor 540, may overlap the first component and the second component and generate a phase image on the basis of the differential component. The image sensor 560, under the control of the processor 540, may store the generated phase image in the memory 550. The processor 540 may receive the phase image from the memory 550.

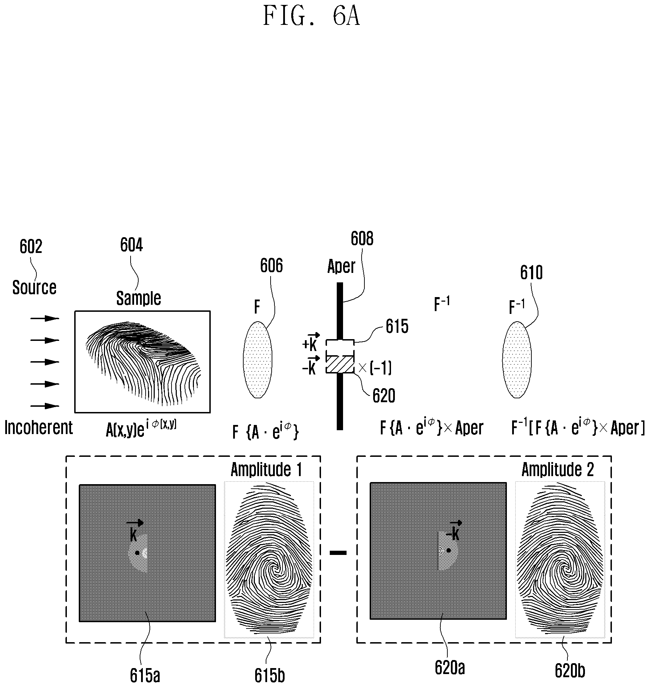

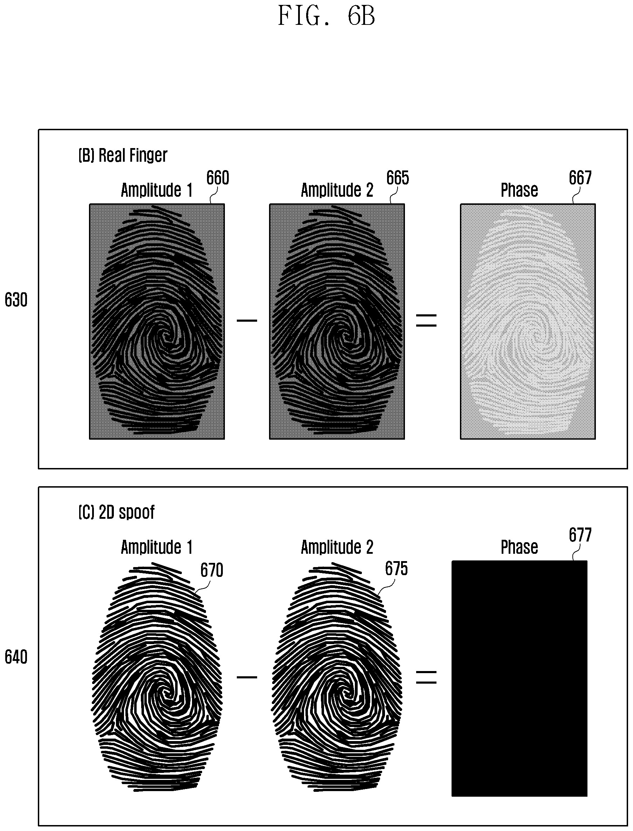

FIG. 6A illustrates a method of acquiring fingerprint information of an electronic device, according to various embodiments. FIG. 6B illustrates phase images acquired on an electronic device, according to various embodiments.

With reference to FIGS. 6A and 6B, an aperture 608 according to various embodiments may be designed to filter light into complementary components. In the comparative embodiment in FIG. 4B above, the electronic device may require a plurality of apertures (e.g., the first aperture 428a and the second aperture 428b in FIG. 4B) or a plurality of light sources to filter light into complementary components. In FIG. 4 above, the first aperture 428a may be designed with a first shape that only allows spatial frequency information of a (-) component to pass through in the Fourier domain, and the second aperture 428b may be designed with a second shape that only allows spatial frequency information of a (+) component to pass through in the Fourier domain.

However, an electronic device (e.g., the electronic device 500 in FIG. 5A) according to various embodiments of the present document may filter light into complementary components using a single light source and a half-wave plate (e.g., the half-wave plate 505 in FIG. 5B). The half-wave plate (e.g., the half-wave plate 505 in FIG. 5B) may be disposed on the aperture 608. The optical signal that has passed through the half-wave plate 505 may be filtered to have only the spatial frequency information of the (-) component in a specific direction for which phase information is desired to be acquired.

According to an embodiment, the optical signal passing through an area 615 where the half-wave plate 505 is not positioned on the aperture 608 may be filtered to have only the spatial frequency information of the (+) component in a specific direction for which phase information is desired to be acquired.

According to an embodiment, the external object 604 of a three-dimensional shape (e.g., a fingerprint sample) may be expressed as a complex expression, $A(x,y)e^{i\phi(x,y)}$, that includes phase information as well as amplitude information.

According to an embodiment, the reflection light, at least partially reflected from the external object 604, may be incident on a first lens 606 with a characteristic, i.e., $A(x,y)e^{i\phi(x,y)}$, of a three-dimensional object.

When information on light incident on the first lens 606 (not illustrated) is Fourier transformed and defined as $F\{A \cdot e^{i\phi}\}$, an optical signal 615a passing through the area 615 where the half-wave plate 505 is not positioned on the aperture 608 may be defined as $F\{A \cdot e^{i\phi}\} \times aper1$ with some frequency components blocked.

According to an embodiment, the electronic device 500 may obtain light of a component that is filtered by the aperture 608 of the light components that have passed through the first lens 606. The electronic device 500 may perform an inverse Fourier transform on light acquired using a different lens (e.g., a tube lens) 610. The inverse Fourier transformed light may be changed to the image domain and transmitted to a photodetector (or an image sensor (e.g., the image sensor 560 in FIG. 5B)) (not illustrated). Here, the inverse Fourier transformed light may be defined as $F^{-1}[F\{A \cdot e^{i\phi}\} \times aper1]$.

When information on light incident on the first lens 606 (not illustrated) is Fourier transformed and defined as $F\{A \cdot e^{i\phi}\}$, an optical signal 620a passing through the area 620 where the half-wave plate 505 is positioned on the aperture 608 may be defined as $F\{A \cdot e^{i\phi}\} \times aper2$ with some frequency components blocked.

According to an embodiment, the electronic device 500 may acquire light of a component that is filtered by the aperture 608 and the half-wave plate 505 of the light components that have passed through the first lens 606. The electronic device 500 may perform an inverse Fourier transform on light acquired using a different lens (e.g., a tube lens) 610 for the acquired light. The inverse Fourier transformed light may be changed to the image domain and transmitted to a photodetector (or an image sensor) (not illustrated). Here, the inverse Fourier transformed light may be defined as $F^{-1}[F\{A \cdot e^{i\phi}\} \times aper2]$.

The photodetector (or the image sensor 560) according to various embodiments may detect only amplitude information from $F^{-1}[F\{A \cdot e^{i\phi}\} \times aper1]$ component, which is a complex component, which reaches the photodetector. The image sensor 560 may acquire a first component (e.g., amplitude 1) 615b corresponding to the amplitude information of a first area 615.

The photodetector (or the image sensor 560) according to various embodiments may detect only amplitude information from $F^{-1}[F\{A \cdot e^{i\phi}\} \times aper2]$ component, which is a complex component, which reaches the photodetector. The image sensor 560 may acquire a second component (e.g., amplitude 2) 620b corresponding to the amplitude information of a second area 620.

For example, when Fourier domain information of the first component (e.g.,+ k component) filtered through the aperture 608 is c1, the first component 615b may be represented as shown in Equation 1 below.

[Equation 1]

$$\text{Amplitude image 1} = \left| \sum c_{1n} e^{i \overline{kn} \cdot \vec{x}} \right|^2$$

When Fourier domain information of a second component (- k component) filtered through the aperture 608 is c2, the second component 620b may be represented as shown in Equation 2 below.

[Equation 2]

$$\text{Amplitude image 2} = \left| \sum c_{2n} e^{-i \overline{kn} \cdot \vec{x}} \right|^2$$

The first component (e.g., amplitude 1) 615b may represent information according to reflection light when the fingerprint is irradiated with light in the +k direction, and the second component (e.g., amplitude 2) 620b may represent information according to reflection light when the fingerprint is irradiated with light in the- k direction.

Meanwhile, when the external object 604 is a three-dimensional fingerprint sample, flexural (or depth) information varies depending on a position (x,y) of the ridge and valley of the fingerprint, and the phase information (phase φ) of the fingerprint may have a value φ(x,y) that is not constant but varies depending on the position (x,y).

The electronic device 500, according to various embodiments, may acquire the first component 615b and the second component 620b. The electronic device 500 may generate a phase image using a differential component within an area where the first component 615b and the second component 620b overlap. The electronic device 500 may determine, on the basis of the generated phase image, whether an external object (sample) has a solid (three-dimensional) shape or a planar (two-dimensional) shape.

As illustrated at the reference numeral 640 in FIG. 6B, when the object is a two-dimensional sample, since the depth information does not change with position coordinates (x,y), the phase is zero (e.g., φ(x,y) = 0), and the degree of reflection of the object may be expressed in the form of a real number A(x,y) for each position coordinate. The Fourier transform function of the real number A(x,y) may be represented as Equation 3 below.

[Equation 3]

$$\text{Real} = c_1 e^{-i\vec{k}\cdot\vec{x}} + c_2 e^{+i\vec{k}\cdot\vec{x}}$$

$$= c_1\left(\cos\vec{k}\cdot\vec{x} - i\sin\vec{k}\cdot\vec{x}\right) + c_2\left(\cos\vec{k}\cdot\vec{x} + i\sin\vec{k}\cdot\vec{x}\right)$$

$$= (c_1 + c_2)\cos\vec{k}\cdot\vec{x} - i(c_1 - c_2)\sin\vec{k}\cdot\vec{x}$$

$$\therefore c_1 - c_2 = 0$$

Here, when the object is a two-dimensional sample, the +k and -k components are symmetrical to each other, so that the values of c1 and c2 are substantially equal to each other. Accordingly, an image 677 that does not have contrast may be acquired by finding a differential component of a first component 670 and a second component 675 corresponding to the two-dimensional sample.

The electronic device 500 may determine that an external object requiring authentication is a solid pattern having a three-dimensional shape when c1 and c2 have different values (or when a differential component of the first component and the second component has contrast).

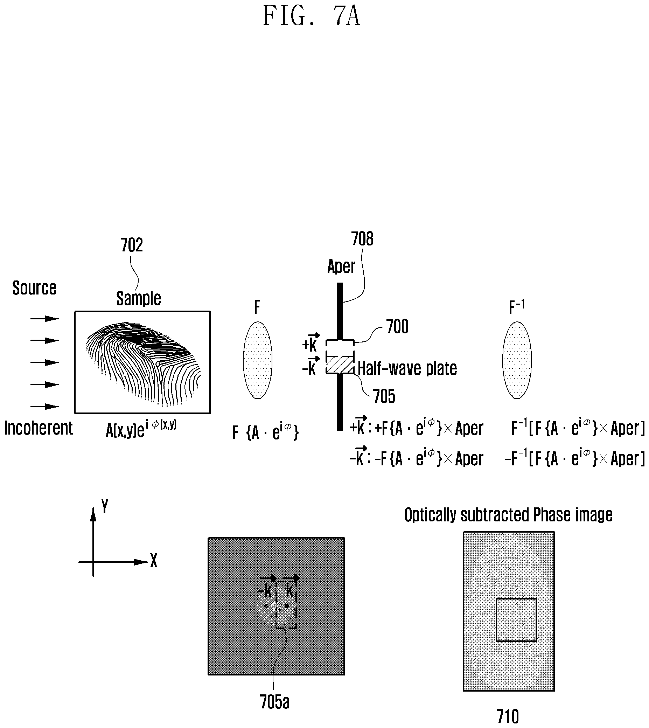

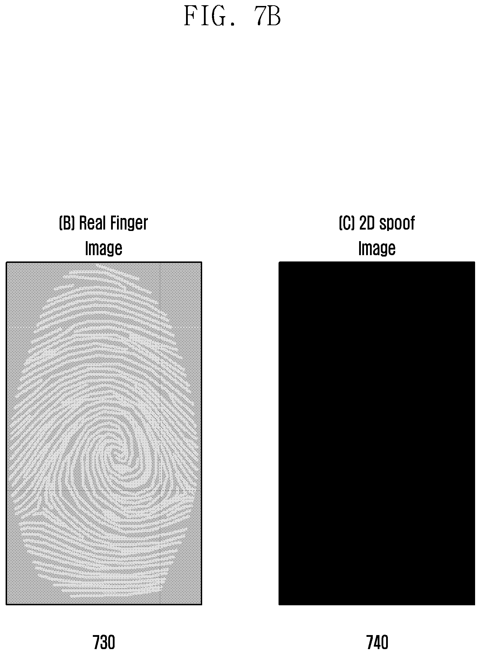

FIG. 7A illustrates a method of acquiring a fingerprint image using a half-wave plate on an electronic device, according to various embodiments. FIG. 7B illustrates phase images acquired on an electronic device, according to various embodiments.

As described in FIG. 6A and FIG. 6B, in a method of acquiring fingerprint information of an electronic device (e.g., the electronic device 500 in FIG. 5A) according to the present document, for fingerprint recognition, a first component (e.g., the first component 615b in FIG. 6A) and a second component (e.g., the second component 620b in FIG. 6A) may be acquired, and a phase image may be generated using a differential component. The first component 615b may refer to phase (complex) information generated by light incident on the area 615 where the half-wave plate is not positioned through a first lens (e.g., the first lens 606 of FIG. 6A). The second component 620b may refer to phase (complex) information generated by light incident on the area 620 where the half-wave plate is positioned through the first lens 606.

The electronic device according to the comparative embodiment may find a differential component by finding an image after allowing light to be incident in different directions, respectively, as illustrated in FIG. 4A. Alternatively, as described in FIG. 4B, the electronic device according to the comparative embodiment may generally block light complementarily using a plurality of apertures, to acquire each image and then find a differential component. However, the method of acquiring an image as described in FIG. 4A may have a disadvantage of increasing the time it takes to acquire an image, since light needs to be incident multiple times. The method of acquiring an image described in FIG. 4B requires the use of a plurality of apertures, which may have a disadvantage of reducing a mounting space and increasing cost.

The electronic device 500, according to various embodiments, may acquire complementary components using a half-wave plate 705 and then optically find a differential component to acquire a phase image. The first component 615b may be generated by light irradiated in a first direction (e.g., +k direction) from a light source. The second component 620b may be generated by light irradiated in a second direction (e.g.- k direction) from a light source. The first direction and the second direction may not be limited thereto.

The half-wave plate 705 may have an effect of optically multiplying some of light components by -1. The electronic device 500 according to the present document may allow light to be incident only once to acquire complementary images using the half-wave plate 705, with a single fingerprint sensor (e.g., the fingerprint sensor 520 in FIG. 5A).

With reference to FIG. 7A, the half-wave plate 705 may be disposed in a partial area in an aperture 708. In an optical aspect, the half-wave plate 705 may be disposed to allow half of the light to pass through the aperture 708. The half-wave plate 705 may be disposed to occupy half an area in the Fourier domain. The optical signal (not illustrated) that has passed through the half-wave plate 705, compared to the optical signal that has not passed through the half-wave plate 705 and has passed through a partial area (e.g., a first area 700) of the first lens 606 and the aperture 708, may be filtered to have only the spatial frequency information of the (-) component in the Fourier domain. The first area 700 may refer to an area where light does not pass through the half-wave plate 705, but only through the aperture 708.

According to an embodiment, the light component may be delayed in phase by a substantially half wavelength while passing through the area where the half-wave plate 705 is positioned. The phase delay by a half wavelength $\left(\frac{\lambda}{2}\right)$ may have the same effect as multiplying by -1, mathematically.

$$\text{Half} - \text{wave plate} = e^{ik_0\frac{\lambda}{2}} = e^{i\frac{2\pi}{\lambda}\frac{\lambda}{2}} = e^{i\pi} = -1$$

According to an embodiment, the light that has passed through the area where the half-wave plate 705 is positioned may have the same effect as multiplying by -1 in the Fourier domain as compared to the light that has passed through the first area 700. A first fingerprint component (not illustrated) may be generated by the light that has passed through the first area 700. A second fingerprint component (not illustrated) may be generated by the light that has passed through the area where the half-wave plate 705 is disposed.

According to an embodiment, the electronic device 500 may, under the control of a processor (e.g., the processor 540 in FIG. 5A), generate a phase image using the first fingerprint component (not illustrated) and the second fingerprint component (not illustrated). The phase image may include thickness information on a sample 702 measured with respect to a direction in which the half-wave plate 705 passes light therethrough.

For example, the half-wave plate 705 may be disposed to occupy approximately a half of a hole area (not illustrated) in the hole area in the aperture 708 in the y-axis direction with respect to the aperture 708. The hole area may refer to an area through which light toward the aperture may pass. In FIG. 7A, the hole area may refer to an area that combines the first area 700 and the second area 705. The area in which the half-wave plate 705 is generated is not limited to the y-axis with respect to the hole area, and may be disposed to occupy a half of the hole area in the x-axis direction with respect to the hole area, such as a first half-wave plate 705a.

According to an embodiment, when the first half-wave plate 705a is disposed to occupy approximately a half of the aperture 708 in the x-axis direction with respect to the aperture 708, an image of the fingerprint may include contrast in a situation in which there is a change in thickness of the sample 702 in the x-axis direction (e.g., a situation in which a real finger is used for authentication). The image of the fingerprint may include contrast generated in the x-axis direction. The contrast may refer to a difference in visual characteristics that makes one object distinguishable from other objects and the background. Alternatively, the contrast may refer to a difference in the degree of brightness and darkness in an image. A third image 730 in FIG. 7B has distinct differences in shading and may include contrast. The electronic device 500 may determine that the sample 702 being measured on the basis of the contrast in the third image 730 is an object with a change in thickness (e.g., a finger, in three dimensions). The electronic device 500 may determine that the sample 702 being measured is an object with a change in thickness (e.g., a finger, in three dimensions) on the basis of the contrast in the third image 730 exceeding a preset first level.

According to an embodiment, the image of the fingerprint may not include contrast in a situation in which there is no change in thickness of the sample 702 in the x-axis direction. A fourth image 740 in FIG. 7B may not have a distinct difference in shading and may not include contrast. The electronic device 500 may determine that the sample 702 being measured is an object (e.g., printed paper, in two dimensions) with no change in thickness on the basis of no contrast in the fourth image 740. The electronic device 500 may determine that the sample 702 being measured is an object (e.g., printed paper, in two dimensions) with no change in thickness on the basis of identifying that contrast in the fourth image 740 is below the preset first level.

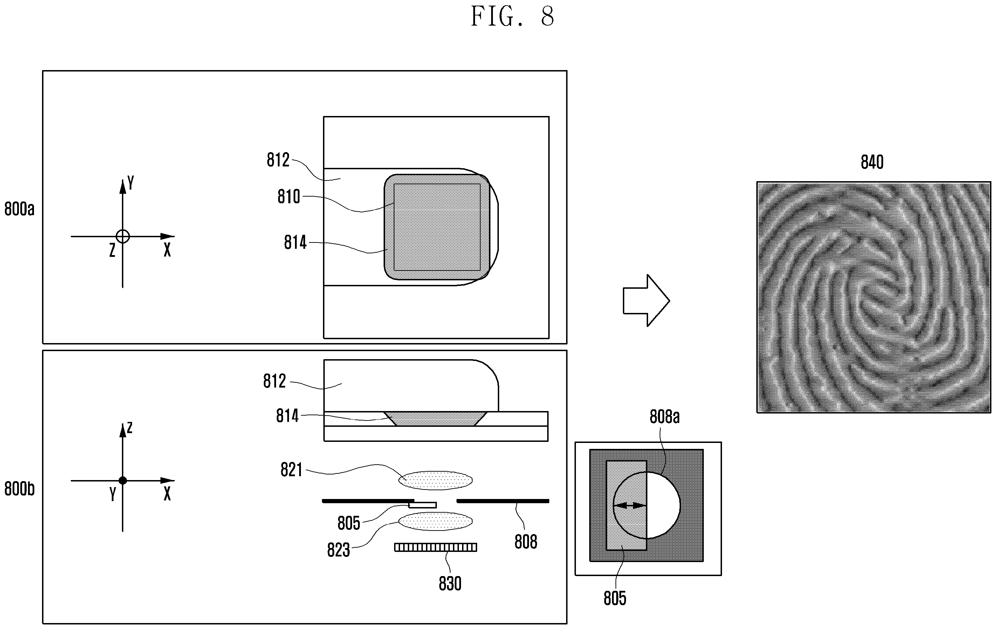

FIG. 8 illustrates a front view 800a and a cross-sectional view 800b of a configuration of an optical fingerprint sensor on an electronic device, according to various embodiments.

The reference numeral 800a in FIG. 8 illustrates a view of a fingerprint sensor (e.g., the fingerprint sensor 520 in FIG. 5A) when viewed from a vertical direction (e.g., +z-axis direction or -z-axis direction) with respect to a plane on which the display (e.g., the display 510 in FIG. 5A) of the electronic device 500 in FIG. 5A is placed. The reference numeral 800b in FIG. 8 illustrates a cross-sectional view of the fingerprint sensor 520 when the display 510 of the electronic device 500 is viewed from a bezel of the side surface portion (in the y-axis direction).

According to an embodiment, an active area 810 may refer to an area (or fingerprint sensing area, fingerprint recognition area) that is activated for authentication when a sample (e.g., a user's finger 812) is positioned on a display (e.g., the display 510 of FIG. 5A). A processor (e.g., processor 540 in FIG. 5A) may irradiate the user's finger 812 with light using a light source 814 and collect reflection light using an image sensor 830 (e.g., the image sensor 560 in FIG. 5A).

According to an embodiment, the processor 540 may analyze the reflection light collected into the image sensor 830 through a first lens 821, an aperture 808, and a second lens 823 and generate the reflection light in the form of a fingerprint image 840. In addition, the processor 540 may analyze the reflection light collected into the image sensor 830 through the first lens 821, the aperture 808, the second lens 823, and a half-wave plate 805 and generate the reflection light in the form of a fingerprint image 840. A process for generating the fingerprint image 840 has been previously described in FIGS. 5B and 6A above, and redundant descriptions will be omitted hereinafter. The processor 540 may compare the fingerprint image 840 to a user's fingerprint stored in a memory (e.g., the memory 550 in FIG. 5A) and perform a designated operation when a match is made. For example, the processor 540 may unlock the security of an electronic device (e.g., the electronic device 500 in FIG. 5A).

According to an embodiment, the half-wave plate 805 may be disposed between the first lens 821 and the second lens 823. Hereinafter, the position of the half-wave plate 805 is described assuming that the number of lenses is two, but the number of lenses may not be limited thereto. When the electronic device 500 includes three or more lenses, the half-wave plate 805 may be disposed in at least one of the spaces between each lens. For example, when the electronic device 500 includes three lenses (e.g., a first lens, a second lens, and a third lens), the half-wave plate 805 may be disposed between the first lens and the second lens, or between the second lens and the third lens. The half-wave plate 805 may be disposed to occupy an area corresponding to approximately a half of a hole area 808a in the aperture 808 in a specific direction (e.g., x-axis). The fingerprint image 840 may include contrast generated in a specific direction (e.g., x-axis) 840a. As in FIG. 7A, the processor 540 may determine that a sample (e.g., the user's finger 812) being measured is a solid (three dimensions) on the basis of the fingerprint image 840 including contrast. The processor 540 may determine that a sample being measured is not a solid (e.g., a paper on which a fingerprint is printed) on the basis of the fingerprint image 840 not including contrast.

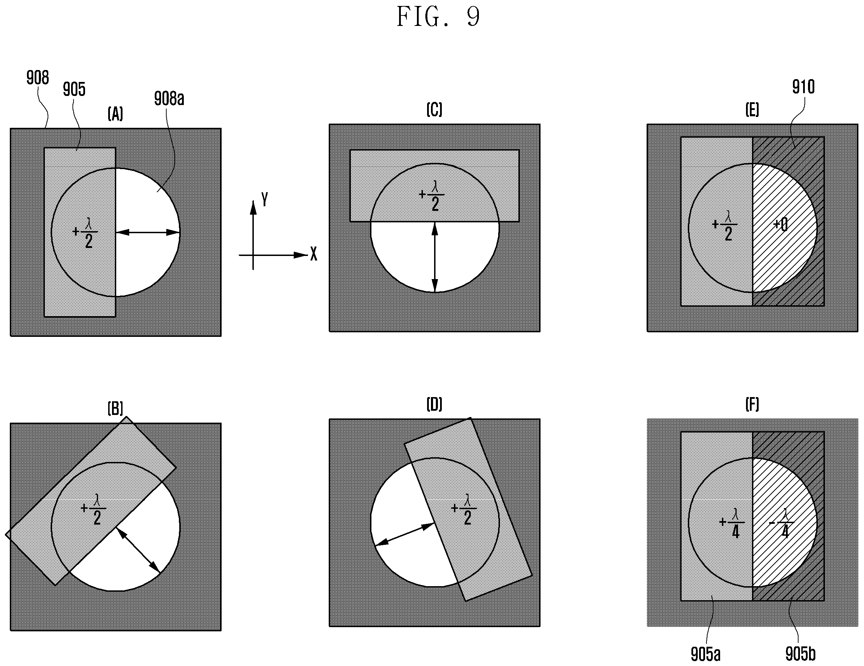

FIG. 9 illustrates a position of a half-wave plate on an aperture according to various embodiments. The half-wave plate 905 may be disposed overlapping a hole area 908a in the aperture 908. The half-wave plate 905 may create a phase difference by a half wavelength for light passing through the half-wave plate compared to light passing through an area where the half-wave plate 905 is not disposed. According to an embodiment, the half-wave plate 905 may be disposed at approximately half a position with respect to a center of a lens in the same plane (position), in a situation in which an electronic device (e.g., the electronic device 500 in FIG. 5A) does not separately include the aperture 908. The same plane may refer to a plane in which the hole area 908a is positioned.

According to an embodiment, the half-wave plate 905 may be disposed to cover a portion corresponding approximately a half of the aperture 908 in a specific direction. The position of the half-wave plate 905 is not limited to occupying approximately a half of the hole area 908a of the aperture 908, and may be disposed to occupy approximately half an area in the Fourier domain. The position of the half-wave plate 905 may be disposed to create a phase difference by a half wavelength, in the Fourier domain.

According to an embodiment, the half-wave plate 905 may be disposed to cover approximately a half of the hole area 908a in the aperture 908 in the x-axis direction (FIG. 9A). The half-wave plate 905 may be disposed to cover a half of the hole area 908a in the aperture 908 in the y-axis direction (FIG. 9C). The half-wave plate 905 may be disposed to cover approximately a half of the hole area 908a in the aperture 908 in any direction (FIG. 9B and FIG. 9D).

According to an embodiment, the position of the half-wave plate 905 may be disposed to create a phase difference by a half wavelength, in the Fourier domain. An image sensor (e.g., the image sensor 560 in FIG. 5B and/or the image sensor 830 in FIG. 8) may require a plurality of light components with a phase difference by a half wavelength to find a differential component of the frequency component of light. The image sensor 560 may acquire a plurality of light components with a phase difference by a half wavelength using the half-wave plate 905 and a full-wave plate 910 (FIG. 9E). The full-wave plate 910 may have substantially the same transmittance as the half-wave plate 905 while not changing the phase of the light passing therethrough. The full-wave plate 910 may reduce the amplitude of the transmitted light to a level similar to that of the half-wave plate 905 upon light transmission. The electronic device 500 may reduce a difference in amplitude between a light component that has passed through the half-wave plate 905 and a light component that has not passed through the half-wave plate 905 using the full-wave plate 910. The electronic device 500 may find a differential component of a plurality of light components using the half-wave plate 905 and the full-wave plate 910 and obtain a clearer phase image as compared to when the full-wave plate 910 is not used. A wave plate that the image sensor 560 may use to acquire a plurality of light components with a phase difference by a half wavelength is not limited to the half-wave plate 905. The image sensor 560 may acquire a plurality of light components with a phase difference by a half wavelength using a + quarter wave plate 905a and a - quarter wave plate 905b in combination (FIG. 9F).

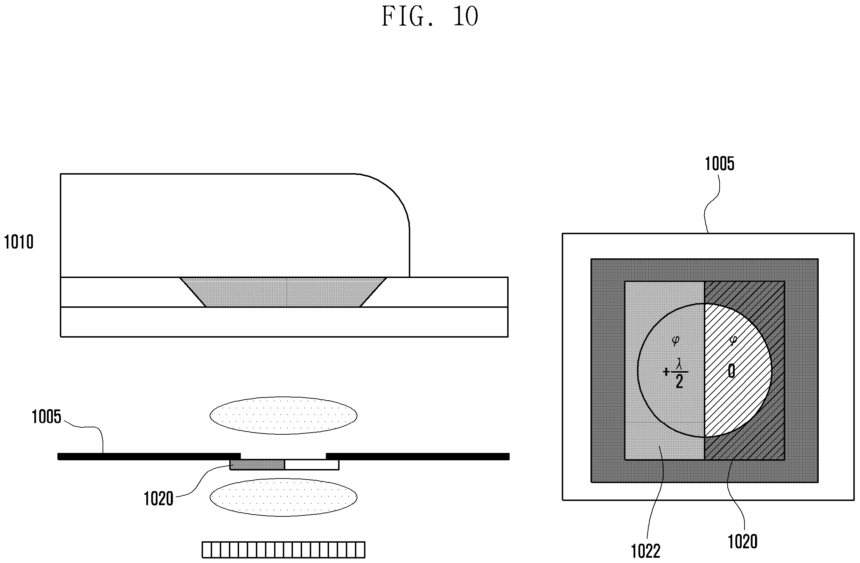

FIG. 10 illustrates a process of recognizing a fingerprint of an electronic device, according to various embodiments.

With reference to FIG. 10, an electronic device (e.g., the electronic device 500 in FIG. 5A) may further include a spatial light modulator (SLM) 1020 in the aperture. The electronic device 500 may, under the control of a processor (e.g., the processor 540 in FIG. 5A), variably add a phase difference of a half wavelength to a specific portion 1022 in an aperture 1005 using the spatial light modulator 1020.

According to an embodiment, the processor 540 may, in response to identifying that the acquired fingerprint image does not have contrast in a disposition direction of the half-wave plate set by the spatial light modulator, change a direction to create a phase difference of a half wavelength in the aperture 1005 using the spatial light modulator 1020.

As in FIG. 7A and FIG. 7B, the processor 540 may determine that a measured sample 1010 is planar (e.g., two-dimensional) rather than a solid on the basis of identifying that the acquired fingerprint image does not have contrast. However, even in a situation in which the measured sample 1010 is a three-dimensional object, when a portion of the sample 1010 in which a fingerprint is formed in only one direction is measured in the image sensor, and the fingerprint is formed such that a direction of a portion in which the fingerprint is formed matches a measurement direction of the sample 1010, a generated fingerprint image may not have contrast. The processor 540 may incorrectly determine that the sample 1010 is a non-solid object on the basis of the fingerprint image not having contrast, even in a situation in which the measured sample 1010 is a solid (e.g., a finger, a three-dimensional object).

According to an embodiment, in a situation in which the direction in which the fingerprint is formed is constant, the processor 540 may differently control a direction in which a thickness of the sample 1010 is measured and a direction in which the fingerprint is formed by differently changing the direction in which a phase difference of a half wavelength is created. The processor 540 may determine that the sample 1010 is a non-solid object on the basis of the acquired fingerprint image not having contrast, even in a situation in which the direction in which the thickness of the sample 1010 is measured and the direction in which the fingerprint is formed are different.

Alternatively, the processor 540 may determine that the sample 1010 is a solid on the basis of the acquired fingerprint image having contrast, in a situation in which the direction in which the thickness of the sample 1010 is measured and the direction in which the fingerprint is formed are different.

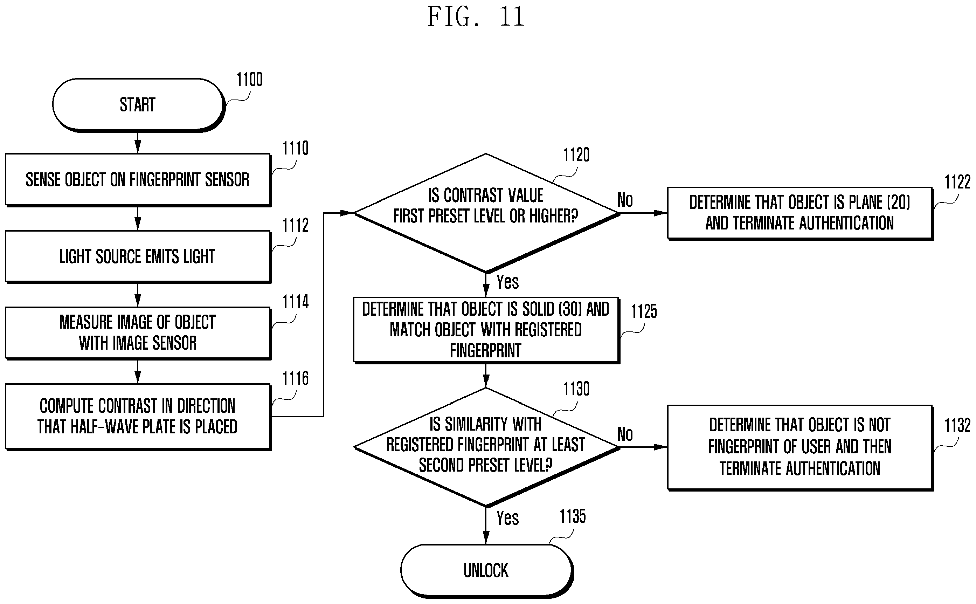

FIG. 11 is a flowchart illustrating a method of acquiring fingerprint information of an electronic device, according to various embodiments.

In embodiments below, each operation may be performed sequentially, but is not required to be performed sequentially. For example, the order of each operation may be changed, and at least two operations may be performed in parallel.

The operations described through FIG. 11 may be implemented on the basis of instructions that may be stored in a computer recording medium or memory (e.g., the memory 550 in FIG. 5A). An illustrated method 1100 may be executed by the electronic device (e.g., the electronic device 500 in FIG. 5A) described above through FIGS. 1 to 10, the technical features of which have been described above will be omitted hereinafter.

At operation 1110, the electronic device 500 may, under the control of a processor (e.g., the processor 540 in FIG. 5A), sense an object using a fingerprint sensor (e.g., the fingerprint sensor 520 in FIG. 5B). The object may have at least one form of a solid (e.g., a user's finger) or a plane (e.g., a piece of paper on which a user's fingerprint is printed). At operation 1112, the processor 540 may control a light source (e.g., the light source 814 in FIG. 8) to emit toward the object. At operation 1114, an image sensor (e.g., the image sensor 560 in FIG. 5B) may measure an image of the object using at least some reflection light reflected from the object. At operation 1116, the processor 540 may calculate contrast in a direction in which a half-wave plate (e.g., the half-wave plate 505 in FIG. 5B) is placed, on the basis of an image of the acquired object. The contrast may refer to a difference in visual characteristics that makes one object distinguishable from other objects and the background. Alternatively, the contrast may refer to a difference in the degree of brightness and darkness in an image.

At operation 1120, the processor 540 may identify whether the calculated contrast value is equal to or greater than a preset first level. The processor 540 may determine, at operation 1122, that the object is planar (two-dimensional) on the basis of identifying that the calculated contrast value is below the preset first level. The processor 540 may, on the basis of determining that the object is planar, determine that the object is not a user's finger, and terminate the authentication.

The processor 540 may determine, at operation 1125, that the object is a solid (e.g., a user's finger, a three-dimensional object) on the basis of identifying that the calculated contrast value is equal to or greater than the preset first level. The processor 540 may compare the object to a fingerprint registered in the memory 550 on the basis of determining that the object is a solid.

At operation 1130, the processor 540 may identify whether an image of the measured object substantially matches a fingerprint registered in the memory 550. The processor 540 may, at operation 1135, unlock a secure lock of the electronic device 500 on the basis of an image of the measured object matching a fingerprint registered in the memory 550 to a preset second level or higher.

Alternatively, the processor 540 may determine that the measured object is not a user's finger on the basis of identifying that the image of the measured object does not match the fingerprint registered in the memory 550 to the preset second level or higher. The processor 540 may maintain the secure lock of the electronic device 500 and terminate the authentication process on the basis of determining that the measured object is not the user's finger.

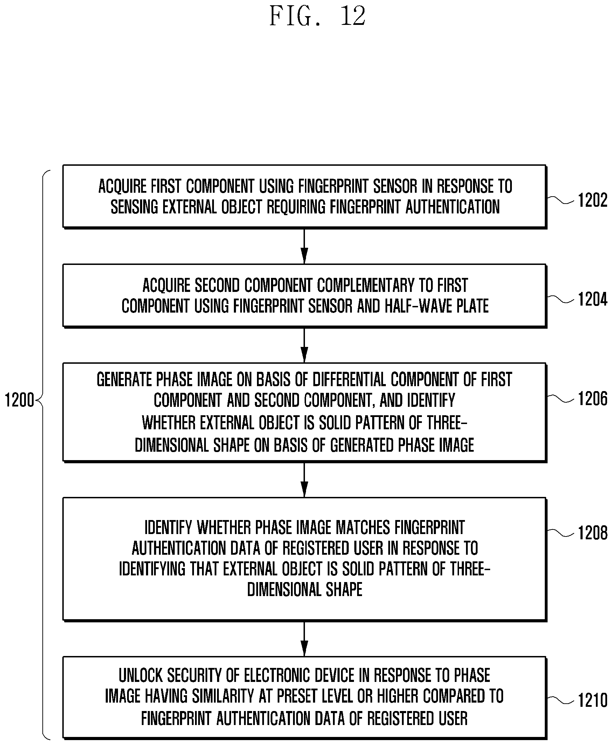

FIG. 12 is a flowchart illustrating a method of acquiring fingerprint information of an electronic device, according to various embodiments.

In embodiments below, each operation may be performed sequentially, but is not required to be performed sequentially. For example, the order of each operation may be changed, and at least two operations may be performed in parallel.

At operation 1202, the processor 540 may acquire a first component using a fingerprint sensor (e.g., the fingerprint sensor 520 in FIG. 5A) in response to sensing an external object requiring fingerprint authentication.

At operation 1204, the processor 540 may acquire a second component complementary to the first component using the fingerprint sensor 520 and a half-wave plate (e.g., the half-wave plate 505 in FIG. 5B).

In an embodiment, the first component that has not passed through the half-wave plate 505 and the second component that has passed through the half-wave plate 505 may generate a single phase image. At operation 1206, the processor 540 may acquire the generated phase image. The processor 540 may identify whether the external object is a solid pattern of a three-dimensional shape on the basis of the generated phase image. The process of acquiring a phase image using the half-wave plate 505 has been described in FIG. 6A and FIG. 6B, and redundant descriptions will be omitted hereinafter.

At operation 1208, the processor 540 may, in response to identifying that the external object is a solid pattern of a three-dimensional shape, identify whether the phase image matches fingerprint authentication data of a registered user in a memory (e.g., the memory 550 of FIG. 5A).

At operation 1210, the processor 540 may unlock the security of the electronic device (e.g., the electronic device 500 in FIG. 5A) in response to the phase image having a similarity of a preset level or higher compared to the fingerprint authentication data of the registered user.

The electronic device 500 may include the display 510, a fingerprint sensor 520 disposed on the display 510, the memory 550, and the processor 540 operatively connected to the display, the fingerprint sensor, and the memory. A fingerprint sensor may include a lens disposed in a sensing area of the fingerprint sensor, an aperture that adjusts an amount of light incident on the lens, and a half-wave plate that is disposed to at least partially overlap the sensing area of the fingerprint sensor and generates a phase difference in light as a second component complementary to a first component. The half-wave plate may be disposed in the sensing area of the fingerprint sensor so that the second component has a phase difference of a substantially half wavelength from the first component. A processor may, in response to sensing contact with an external object related to fingerprint authentication in the sensing area, output light to the external object using a light source. The processor may, using the fingerprint sensor, acquire a first component generated on the basis of light that is at least partially reflected by an external object and has not passed through the half-wave plate, and a second component generated on the basis of light that is at least partially reflected by the external object and has passed through the half-wave plate. The processor may generate a phase image on the basis of a differential component of the first component and the second component, and may identify whether the external object is a pattern of a three-dimensional shape on the basis of the phase image. The processor may, in response to identifying that the external object is a pattern of a three-dimensional shape, identify whether the phase image matches fingerprint authentication data of a registered user, and perform a designated operation on the basis of a result of comparing the phase image to the fingerprint authentication data of the registered user.

According to an embodiment, an electronic device may further include a full-wave plate configured to reduce an amplitude component of light passing through a lens to a level similar to an amplitude component of light passing through a half-wave plate, in which the full-wave plate is disposed in a sensing area of a fingerprint sensor and disposed to include at least a portion of a light transmitting area, and the half-wave plate is disposed in at least a portion of the sensing area of the fingerprint sensor.

According to an embodiment, the half-wave plate may be disposed in an area corresponding to substantially a half of the light transmitting area with respect to a center of the lens.

According to an embodiment, the processor may be configured to generate a combined image on the basis of the differential component of the first component and the second component, and to identify whether the combined image matches the fingerprint authentication data of the registered user.

According to an embodiment, the first component may be a negative directional component with respect to a specific axis in a spatial frequency domain, and the second component may be a positive directional component with respect to the specific axis, in which the specific axis may include one of an x-axis, a y-axis, or an axis having any direction.

According to an embodiment, the half-wave plate may be disposed in at least a portion of the sensing area of the fingerprint sensor, and a position at which the half-wave plate is disposed may be determined on the basis of a center frequency of a light source.

According to an embodiment, the first component may be a negative directional component with respect to a specific axis in a spatial frequency domain, and the second component may be a positive directional component with respect to the specific axis, in which the specific axis may be one of an x-axis, a y-axis, or an axis having any direction.

According to an embodiment, the processor may be configured to determine that the external object is a pattern of a three-dimensional shape on the basis of identifying that the phase image has contrast, and to perform a designated operation, and to determine that the external object is a pattern of a two-dimensional shape on the basis of identifying that the phase image does not have contrast so that the authentication fails.

According to an embodiment, the processor may be configured to determine that the external object is a pattern of a three-dimensional shape on the basis of identifying that the phase image has contrast, and to perform a designated operation, and to determine that the external object is a pattern of a two-dimensional shape on the basis of identifying that the phase image does not have contrast so that the authentication fails.

According to an embodiment, the aperture may pass light to a hole area having a first shape and block light to another area. The half-wave plate may be disposed to at least partially overlap a hole area to delay a phase of light passing through the half-wave plate by a half wavelength.

According to an embodiment, the processor may be configured to compare the phase image to fingerprint authentication data of a registered user and allow the fingerprint authentication to fail in response to having a similarity below a preset level.

According to an embodiment, the fingerprint sensor may include an optical fingerprint sensor.

According to an embodiment, the processor may be configured to change a position of the half-wave plate, which creates a phase difference of a half wavelength, in a different direction using a spatial light modulator (SLM) capable of phase modulation on the basis of identifying that the phase image is an image that does not have contrast, acquire the first component and the second component in response to changing the position of the half-wave plate in a different direction, generate a new phase image on the basis of the differential component of the first component and the second component, and determine, in response to identifying that the phase image is an image that does not have contrast, that the external object is a pattern of a two-dimensional shape so that the authentication fails.

A method of acquiring fingerprint information of an electronic device, according to various embodiments, may include outputting light to an external object using a light source in a sensing area in response to sensing contact with the external object related to fingerprint authentication, acquiring, using a fingerprint sensor, a first component generated on the basis of light that is at least partially reflected by the external object and has not passed through a half-wave plate, acquiring a second component generated on the basis of light that is at least partially reflected by the external object and that has passed through the half-wave plate, generating a phase image on the basis of a differential component of the first component and the second component, identifying whether the external object is a pattern of a three-dimensional shape on the basis of the phase image, identifying, in response to identifying that the external object is a solid pattern of the three-dimensional shape, whether the phase image matches fingerprint authentication data of a registered user, and performing a designated operation on the basis of a result of comparing the phase image to the fingerprint authentication data of the registered user.

According to an embodiment, the identifying, in response to identifying that the external object is a solid pattern of the three-dimensional shape, whether the phase image matches fingerprint authentication data of a registered user may further include generating a single combined image on the basis of the differential component of the first component and the second component and identifying whether the combined image matches the fingerprint authentication data of the registered user.

According to an embodiment, the identifying whether the external object is a pattern of a three-dimensional shape on the basis of the phase image may further include determining that the external object is a pattern of a three-dimensional shape on the basis of identifying that the phase image has contrast, or configuring to determine that the external object is a pattern of a two-dimensional shape on the basis of identifying that the phase image does not have contrast, such that the authentication fails.

According to an embodiment, the identifying whether the external object is a pattern of a three-dimensional shape on the basis of the phase image may further include determining that the external object is a pattern of a three-dimensional shape on the basis of identifying that the phase image has contrast, or configuring to determine that the external object is a pattern of a two-dimensional shape on the basis of identifying that the phase image does not have contrast, such that the authentication fails.

According to an embodiment, the method of acquiring fingerprint information of an electronic device may further include changing a position of the half-wave plate, which creates a phase difference of a half wavelength, in a different direction using a spatial light modulator (SLM) capable of phase modulation on the basis of identifying that the phase image is an image that does not have contrast, acquiring the first component and the second component in response to changing the position of the half-wave plate in a different direction, generating a new phase image on the basis of the differential component of the first component and the second component, and configuring to determine, in response to identifying that the phase image is an image that does not have contrast, that the external object is a pattern of a two-dimensional shape so that the authentication fails.

## Claims

1. An electronic device, comprising:

   a display;
   a fingerprint sensor disposed on the display;
   a memory; and

a processor operatively connected to the display, the fingerprint sensor, and the memory, wherein the fingerprint sensor includes:

a lens disposed in a sensing area of the fingerprint sensor;
an aperture configured to adjust an amount of light incident on the lens; and
a half-wave plate disposed at least partially overlapping the sensing area of the fingerprint sensor and configured to generate a phase difference in light with a second component complementary to a first component,
wherein the half-wave plate is disposed in the sensing area of the fingerprint sensor so that the second component has a phase difference of a substantially half wavelength from the first component, and
wherein the processor outputs light to an external object using a light source in the sensing area in response to sensing contact with the external object related to fingerprint authentication,
acquires, using the fingerprint sensor, a first component generated on the basis of light that is at least partially reflected by the external object and has not passed through the half-wave plate,
acquires a second component generated on the basis of light that is at least partially reflected by the external object and that has passed through the half-wave plate,
generates a phase image on the basis of a differential component of the first component and the second component,
identifies whether the external object is a pattern of a three-dimensional shape on the basis of the phase image,
identifies, in response to identifying that the external object is a pattern of the three-dimensional shape, whether the phase image matches fingerprint authentication data of a registered user, and
performs a designated operation on the basis of a result of comparing the phase image to the fingerprint authentication data of the registered user.

2. The electronic device of claim 1, further comprising:

a full-wave plate configured to reduce an amplitude component of light passing through the lens to a level similar to an amplitude component of light passing through the half-wave plate,
wherein the full-wave plate is disposed in the sensing area of the fingerprint sensor and disposed to include at least a portion of a light transmitting area, and
wherein the half-wave plate is disposed in at least a portion of the sensing area of the fingerprint sensor.

3. The electronic device of claim 2, wherein the half-wave plate is disposed in an area corresponding to substantially a half of the light transmitting area with respect to a center of the lens.

4. The electronic device of claim 1, wherein the processor is configured to generate a combined image on the basis of the differential component of the first component and the second component, and to identify whether the combined image matches the fingerprint authentication data of the registered user.

5. The electronic device of claim 1, wherein the first component is a negative directional component with respect to a specific axis in a spatial frequency domain, and the second component is a positive directional component with respect to the specific axis,
wherein the specific axis is one of an x-axis, a y-axis, or an axis having any direction.

6. The electronic device of claim 1, wherein the processor is configured to determine that the external object is a pattern of a three-dimensional shape on the basis of identifying that the phase image has contrast, and to perform a designated operation, and to determine that the external object is a pattern of a two-dimensional shape on the basis of identifying that the phase image does not have contrast so that the authentication fails.

7. The electronic device of claim 1, wherein the processor is configured to compare the phase image to fingerprint authentication data of a registered user and allow the fingerprint authentication to fail in response to having a similarity below a preset level.

8. The electronic device of claim 1, wherein the fingerprint sensor includes an optical fingerprint sensor.

9. The electronic device of claim 8, wherein the processor is configured to changes a position of the half-wave plate, which creates a phase difference of a half wavelength, in a different direction using a spatial light modulator (SLM) capable of phase modulation on the basis of identifying that the phase image is an image that does not have contrast,

acquire the first component and the second component in response to changing the position of the half-wave plate in a different direction,

generate a new phase image on the basis of the differential component of the first component and the second component, and

determine, in response to identifying that the phase image is an image that does not have contrast, that the external object is a pattern of a two-dimensional shape so that the authentication fails.

10. The electronic device of claim 1, wherein the aperture passes light to a hole area having a first shape and blocks light to another area.

11. The electronic device of claim 10, wherein the half-wave plate is disposed to at least partially overlap the hole area to delay a phase of light passing through the half-wave plate by a half wavelength.

12. A method of acquiring fingerprint information of an electronic device, the method comprising:

outputting light to an external object using a light source in a sensing area in response to sensing contact with the external object related to fingerprint authentication;

acquiring, using a fingerprint sensor, a first component generated on the basis of light that is at least partially reflected by the external object and has not passed through a half-wave plate;

acquiring a second component generated on the basis of light that is at least partially reflected by the external object and that has passed through the half-wave plate;

generating a phase image on the basis of a differential component of the first component and the second component;

identifying whether the external object is a pattern of a three-dimensional shape on the basis of the phase image;

identifying, in response to identifying that the external object is a solid pattern of a three-dimensional shape, whether the phase image matches fingerprint authentication data of a registered user; and

performing a designated operation on the basis of a result of comparing the phase image to the fingerprint authentication data of the registered user,

wherein the half-wave plate is disposed in the sensing area of the fingerprint sensor so that light having the second component that has passed through the half-wave plate and light having the first component that has not passed through the half-wave plate have a phase difference of a substantially half-wave level.

13. The method of claim 12, wherein the half-wave plate is disposed in at least a portion of the sensing area of the fingerprint sensor.

14. The method of claim 13, wherein the half-wave plate is disposed in an area corresponding to substantially a half of a light transmitting area with respect to a center of a lens.

15. The method of claim 12, wherein the identifying, in response to identifying that the external object is a solid pattern of a three-dimensional shape, whether the phase image matches fingerprint authentication data of a registered user further includes:

generating a single combined image on the basis of the differential component of the first component and the second component; and

identifying whether the combined image matches the fingerprint authentication data of the registered user.

# FIG. 1

FIG. 2

# FIG. 3

Amplitude Image

320

A[x,y]

310

Sample

A[x,y] e $^{i\,\phi[x,y]}$

Phase Image

330

$\phi$[x,y]

# FIG. 4A

# FIG. 4B

**420a**

422 — Source (Incoherent)
424 — Sample, $A(x,y)e^{i\phi(x,y)}$
426 — F, $F\{A \cdot e^{i\phi}\}$
428a — Aper 1, $F\{A \cdot e^{i\phi}\} \times$ Aper1
430 — $F^{-1}$, $F^{-1}[F\{A \cdot e^{i\phi}\} \times$ Aper1], Amplitude 1

432a
434a ($-\vec{k}$)
436a

**420b**

422 — Source (Incoherent)
424 — Sample, $A(x,y)e^{i\phi(x,y)}$
426 — F, $F\{A \cdot e^{i\phi}\}$
428b — Aper 2, $F\{A \cdot e^{i\phi}\} \times$ Aper2
430 — $F^{-1}$, $F^{-1}[F\{A \cdot e^{i\phi}\} \times$ Aper2], Amplitude 2

432b
434b ($\vec{k}$)
436b

# FIG. 4C

# FIG. 5A

**ELECTRONIC DEVICE (500)**

510

**DISPLAY**

530 — **LIGHT SOURCE**

520

**FINGERPRINT SENSOR**

540 — **PROCESSOR**

550 — **MEMORY**

# FIG. 5B

→ ELECTRICAL SIGNAL

------► OPTICAL SIGNAL

| 510 | 501 | 505 | 502 | 560 | 550 |
|---|---|---|---|---|---|
| DISPLAY | FIRST LENS | HALF-WAVE PLATE | SECOND LENS | IMAGE SENSOR | MEMORY |

540

PROCESSOR

EP 4 517 702 A1

# FIG. 6A

602
Source

604
Sample

606
F

608
Aper

615

+$\vec{k}$

−$\vec{k}$ ×(−1)

620

F$^{-1}$

610
F$^{-1}$

Incoherent

A(x,y)e$^{i\,\phi(x,y)}$

F{A · e$^{i\phi}$}

F{A · e$^{i\phi}$}×Aper

F$^{-1}$[F{A · e$^{i\phi}$}×Aper]

Amplitude 1

$\vec{k}$

615a      615b

Amplitude 2

−$\vec{k}$

620a      620b

# FIG. 6B

# FIG. 7A

Source

→
→
→
→
→

Incoherent

**702**

Sample

$A(x,y)e^{i\,\phi(x,y)}$

F

$F\{A \cdot e^{i\phi}\}$

**708**

Aper

**700**

$+\vec{k}$
$-\vec{k}$

Half-wave plate

**705**

$+\vec{k}: +F\{A \cdot e^{i\phi}\} \times Aper$

$-\vec{k}: -F\{A \cdot e^{i\phi}\} \times Aper$

$F^{-1}$

$F^{-1}[F\{A \cdot e^{i\phi}\} \times Aper]$

$-F^{-1}[F\{A \cdot e^{i\phi}\} \times Aper]$

Y

X

$-\vec{k}$  $\vec{k}$

**705a**

Optically subtracted Phase image

**710**

FIG. 7B

(B) Real Finger
Image

(C) 2D spoof
Image

730

740

# FIG. 8

EP 4 517 702 A1

# FIG. 9

EP 4 517 702 A1

FIG. 10

EP 4 517 702 A1

# FIG. 11

```
                    ┌─────────────────┐ 1100
                    │      START      │
                    └────────┬────────┘
                             │
        ┌────────────────────▼──────────────────┐ 1110
        │  SENSE OBJECT ON FINGERPRINT SENSOR   │
        └────────────────────┬──────────────────┘
                             │
        ┌────────────────────▼──────────────────┐ 1112
        │        LIGHT SOURCE EMITS LIGHT        │
        └────────────────────┬──────────────────┘
                             │
        ┌────────────────────▼──────────────────┐ 1114
        │          MEASURE IMAGE OF OBJECT       │
        │             WITH IMAGE SENSOR          │
        └────────────────────┬──────────────────┘
                             │
        ┌────────────────────▼──────────────────┐ 1116
        │     COMPUTE CONTRAST IN DIRECTION      │
        │      THAT HALF-WAVE PLATE IS PLACED    │
        └───────────────────────────────────────┘
```

1120 — IS CONTRAST VALUE FIRST PRESET LEVEL OR HIGHER?

No → DETERMINE THAT OBJECT IS PLANE (20) AND TERMINATE AUTHENTICATION — 1122

Yes ↓

1125 — DETERMINE THAT OBJECT IS SOLID (30) AND MATCH OBJECT WITH REGISTERED FINGERPRINT

1130 — IS SIMILARITY WITH REGISTERED FINGERPRINT AT LEAST SECOND PRESET LEVEL?

No → DETERMINE THAT OBJECT IS NOT FINGERPRINT OF USER AND THEN TERMINATE AUTHENTICATION — 1132

Yes → 1135 — UNLOCK

EP 4 517 702 A1

# FIG. 12

1200 {

ACQUIRE FIRST COMPONENT USING FINGERPRINT SENSOR IN RESPONSE TO SENSING EXTERNAL OBJECT REQUIRING FINGERPRINT AUTHENTICATION — 1202

ACQUIRE SECOND COMPONENT COMPLEMENTARY TO FIRST COMPONENT USING FINGERPRINT SENSOR AND HALF-WAVE PLATE — 1204

GENERATE PHASE IMAGE ON BASIS OF DIFFERENTIAL COMPONENT OF FIRST COMPONENT AND SECOND COMPONENT, AND IDENTIFY WHETHER EXTERNAL OBJECT IS SOLID PATTERN OF THREE-DIMENSIONAL SHAPE ON BASIS OF GENERATED PHASE IMAGE — 1206

IDENTIFY WHETHER PHASE IMAGE MATCHES FINGERPRINT AUTHENTICATION DATA OF REGISTERED USER IN RESPONSE TO IDENTIFYING THAT EXTERNAL OBJECT IS SOLID PATTERN OF THREE-DIMENSIONAL SHAPE — 1208

UNLOCK SECURITY OF ELECTRONIC DEVICE IN RESPONSE TO PHASE IMAGE HAVING SIMILARITY AT PRESET LEVEL OR HIGHER COMPARED TO FINGERPRINT AUTHENTICATION DATA OF REGISTERED USER — 1210

## INTERNATIONAL SEARCH REPORT

International application No.

**PCT/KR2023/003138**

### A. CLASSIFICATION OF SUBJECT MATTER

**G06V 40/13**(2022.01)i; **G06V 40/12**(2022.01)i; **G06V 10/74**(2022.01)i; **G02B 5/00**(2006.01)i; **G06F 21/32**(2013.01)i

According to International Patent Classification (IPC) or to both national classification and IPC

### B. FIELDS SEARCHED

Minimum documentation searched (classification system followed by classification symbols)

G06V 40/13(2022.01); A61B 5/1172(2016.01); G02B 27/28(2006.01); G06F 21/32(2013.01); G06K 9/00(2006.01); G06K 9/20(2006.01); G06K 9/36(2006.01); G06T 7/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 지문(fingerprint), 조리개(aperture), 반파장판(half-wave plate), 위상이미지(phase image), 3차원(3D)

### C. DOCUMENTS CONSIDERED TO BE RELEVANT

| Category* | Citation of document, with indication, where appropriate, of the relevant passages | Relevant to claim No. |
|---|---|---|
| A | KR 10-2021-0112767 A (SAMSUNG ELECTRONICS CO., LTD.) 15 September 2021 (2021-09-15) See paragraphs [0017]-[0056] and [0130], claim 1 and figures 1-4. | 1-15 |
| A | KR 10-1807289 B1 (KWANGWOON UNIVERSITY INDUSTRY-ACADEMIC COLLABORATION FOUNDATION) 11 December 2017 (2017-12-11) See paragraph [0061], claim 1 and figures 2-4. | 1-15 |
| A | KR 10-2017-0035343 A (SAFRAN IDENTITY & SECURITY) 30 March 2017 (2017-03-30) See claims 1-2 and figures 10-15. | 1-15 |
| A | KR 10-1417663 B1 (IUCF-HYU (INDUSTRY-UNIVERSITY COOPERATION FOUNDATION HANYANG UNIVERSITY)) 11 July 2014 (2014-07-11) See claims 1 and 8 and figures 1-4. | 1-15 |
| A | KR 10-2015-0020327 A (NEC SOLUTION INNOVATORS, LTD.) 25 February 2015 (2015-02-25) See claim 1 and figures 1-5. | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 June 2023** | **15 June 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/003138**

| Patent document cited in search report | | | Publication date (day/month/year) | Patent family member(s) | | | Publication date (day/month/year) |
|---|---|---|---|---|---|---|---|
| KR | 10-2021-0112767 | A | 15 September 2021 | US | 2022-0415079 | A1 | 29 December 2022 |
| | | | | WO | 2021-177637 | A1 | 10 September 2021 |
| KR | 10-1807289 | B1 | 11 December 2017 | None | | | |
| KR | 10-2017-0035343 | A | 30 March 2017 | CN | 107016326 | A | 04 August 2017 |
| | | | | EP | 3147822 | A1 | 29 March 2017 |
| | | | | EP | 3147822 | B1 | 03 March 2021 |
| | | | | US | 10275629 | B2 | 30 April 2019 |
| | | | | US | 2017-0083742 | A1 | 23 March 2017 |
| KR | 10-1417663 | B1 | 11 July 2014 | None | | | |
| KR | 10-2015-0020327 | A | 25 February 2015 | CN | 104303209 | A | 21 January 2015 |
| | | | | CN | 104303209 | B | 17 May 2017 |
| | | | | EP | 2851869 | A1 | 25 March 2015 |
| | | | | JP | 5881195 | B2 | 09 March 2016 |
| | | | | US | 2015-0161432 | A1 | 11 June 2015 |
| | | | | US | 9323974 | B2 | 26 April 2016 |
| | | | | WO | 2013-172413 | A1 | 12 January 2016 |
| | | | | WO | 2013-172413 | A1 | 21 November 2013 |